# EUROPEAN PATENT SPECIFICATION

(11) **EP 3 089 422 B1**
(45) Date of publication and mention of the grant of the patent: **14.08.2019**
(21) Application number: 14877826.9
(22) Date of filing: 08.01.2014
(51) Int. Cl.: H04L 29/06, H04L 29/08, H04L 29/12, H04L 12/24

(54) **CONTENT DISTRIBUTION METHOD, APPARATUS AND SYSTEM**
INHALTSVERTEILUNGSVERFAHREN, VORRICHTUNG UND SYSTEM
PROCÉDÉ, APPAREIL, ET SYSTÈME DE DISTRIBUTION DE CONTENU

(43) Date of publication of application: 02.11.2016
(73) Proprietor: Huawei Technologies Co., Ltd., Longgang District Shenzhen, Guangdong 518129 (CN)
(72) Inventor: WU, Wenfu, Shenzhen, Guangdong 518129 (CN)
(74) Representative: Pfenning, Meinig & Partner mbB
(86) International application number: PCT/CN2014/070277
(87) International publication number: WO 2015/103738

(56) References cited:
- EP-A1- 2 391 092
- EP-A1- 2 645 777
- CN-A- 101 202 684
- CN-A- 102 769 819
- CN-A- 102 957 624
- US-A1- 2008 242 280
- US-A1- 2010 036 954
- US-A1- 2013 132 544

## Description

### TECHNICAL FIELD

The present invention relates to the field of communications technologies, and in particular, to a content delivery method, apparatus, and system.

### BACKGROUND

A CDN (Content Delivery Network, content delivery network) is a new type of network content service system, is constructed based on an IP network, and provides content delivery and a service based on an efficiency requirement, a quality requirement, and a content order of content access and application. A CDNI (Content Distribution Network Interconnection, content distribution network interconnection) mechanism is a layered CDN mechanism and is classified into an upstream CDN (Upstream CDN) and a downstream CDN (Downstream CDN), where the upstream CDN belongs to a CDN provider, and the downstream CDN generally belongs to an NSP (Network Service Provider, network service provider, which is generally a mobile network operator). A CP/SP (Content Provider/Service Provider, content provider/service provider) signs a business protocol with the upstream CDN, and the upstream CDN signs a business protocol with the downstream CDN. During content delivery, the upstream CDN redirects an access request of a user to the downstream CDN, and the downstream CDN delivers content to UE (User Equipment, user equipment), thereby implementing shortest-path delivery of content.

An existing CDNI mechanism has the following problems: An upstream CDN may sign business protocols with multiple downstream CDNs. In this scenario, after the upstream CDN receives a content request of a user, the upstream CDN cannot determine to select which downstream CDN to serve the user, which causes a possibility that an incorrect downstream CDN is selected, where the downstream CDN does not belong to an NSP accessed by the user, and therefore cannot serve the user. Consequently, a content service requested by the user cannot be provided and user experience is extremely poor. Alternatively, a selected downstream CDN is relatively far from UE, which causes a long transmission delay, low delivery efficiency, low QoS (Quality of Service, quality of service), and poor user experience.
US 2013/0132544A describes that a network element in a network is provided. The network element includes a receiver that receives a content request message. The received content request message indicates content to be transmitted to a device. The network element includes a processor in communication with the receiver. The processor generates a modified content request message by inserting identification data into the content request message. The identification data identifies at least one of a plurality of network nodes in the network. The network element includes a transmitter that transmits the modified content request message to a content distribution network server. The receiver further receives a redirect message that is based on the transmitted modified content request message. The redirect message identifies that a one of the plurality of network nodes is a cache location storing the indicated content.

### SUMMARY

The present invention is as defined in the appended independent claims. Embodiments of the present invention provide a content delivery method, apparatus, and system. A cache device may be selected according to an access location of UE, which reduces network transmission bandwidth, shortens a transmission delay, thereby improving user experience. In addition, the cache device is selected according to the access location of the UE, and in this way, the selected cache device belongs to an NSP accessed by a user, so that the selected cache device can provide a content service requested by the user. In addition, a CP/SP controls whether to select a cache device of the NSP to serve the UE, thereby implementing layered control for a CDN. In addition, cache resources of the network service provider can be open to the content provider or the service provider, thereby implementing monetization processing of the cache resources and increasing income of the network service provider.

The embodiments of the present invention have the following beneficial effects: A content delivery apparatus selects, according to an access location of UE, a content control apparatus to serve the UE; the selected content control apparatus reselects, for the UE, a cache device configured to provide requested content; and the UE can redirect to the cache device to acquire the requested content. Because the reselected cache device may be selected at a location close to the UE, a data interaction path between the UE and the cache device is shortened, which reduces transmission bandwidth of an operator network, thereby improving user experience. In addition, the content control apparatus for serving the UE is selected according to the access location of the UE, and in this way, the cache device selected by the selected content control apparatus belongs to an NSP accessed by a user, so that the selected cache device can provide a content service requested by the user. In addition, the content delivery apparatus controls whether to select a cache device of the network service provider to serve the UE, that is, a CP/SP controls whether to select a cache device of the NSP to serve the UE, thereby implementing layered control for a CDN. In addition, cache resources of the network service provider can be open to the content provider or the service provider, thereby implementing monetization processing of the cache resources and increasing income of the network service provider.

### BRIEF DESCRIPTION OF DRAWINGS

To describe the technical solutions in the embodiments of the present invention or in the prior art more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic flowchart of a content delivery method according to an embodiment of the present invention;
FIG. 2 is a schematic interaction diagram of a content delivery method according to an embodiment of the present invention;
FIG. 3 is a schematic flowchart of another content delivery method according to an embodiment of the present invention;
FIG. 4 is a schematic structural diagram of a content delivery apparatus according to an embodiment of the present invention;
FIG. 5 is a schematic structural diagram of a first location information acquiring module according to an embodiment of the present invention;
FIG. 6 is a schematic structural diagram of another first location information acquiring module according to an embodiment of the present invention;
FIG. 7 is a schematic structural diagram of a content control apparatus acquiring module according to an embodiment of the present invention;
FIG. 8 is a schematic structural diagram of another content control apparatus acquiring module according to an embodiment of the present invention;
FIG. 9 is a schematic structural diagram of a content control apparatus determining module according to an embodiment of the present invention;
FIG. 10 is a schematic structural diagram of another content control apparatus determining module according to an embodiment of the present invention;
FIG. 11 is a schematic structural diagram of a content control apparatus according to an embodiment of the present invention;
FIG. 12 is a schematic structural diagram of a registration information sending module according to an embodiment of the present invention;
FIG. 13 is a schematic structural diagram of another registration information sending module according to an embodiment of the present invention;
FIG. 14 is a schematic structural diagram of a second location information acquiring module according to an embodiment of the present invention;
FIG. 15 is a schematic structural diagram of another second location information acquiring module according to an embodiment of the present invention;
FIG. 16 is a schematic structural diagram of still another second location information acquiring module according to an embodiment of the present invention;
FIG. 17 is a schematic structural diagram of a cache device acquiring module according to an embodiment of the present invention;
FIG. 18 is a schematic structural diagram of a cache device determining module according to an embodiment of the present invention;
FIG. 19 is a schematic structural diagram of a first processor according to an embodiment of the present invention; and
FIG. 20 is a schematic structural diagram of a second processor according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

The following provides detailed descriptions separately by using specific embodiments.

In the embodiments of the present invention, a content delivery apparatus and a content control apparatus (that is, a content control apparatus) may be independent network elements, or may be built into another network element. For example, a function of the content control apparatus may be implemented in a gateway of a mobile network. An interface between network elements may be a message interface or an application programming interface API (Application Programming Interface).

The content delivery apparatus and the content control apparatus may be a software-defined networking SDN (Software Defined Network) controller, a CDN controller, a domain name system DNS (Domain Name System) controller, or the like, which is not limited in this embodiment of the present invention.

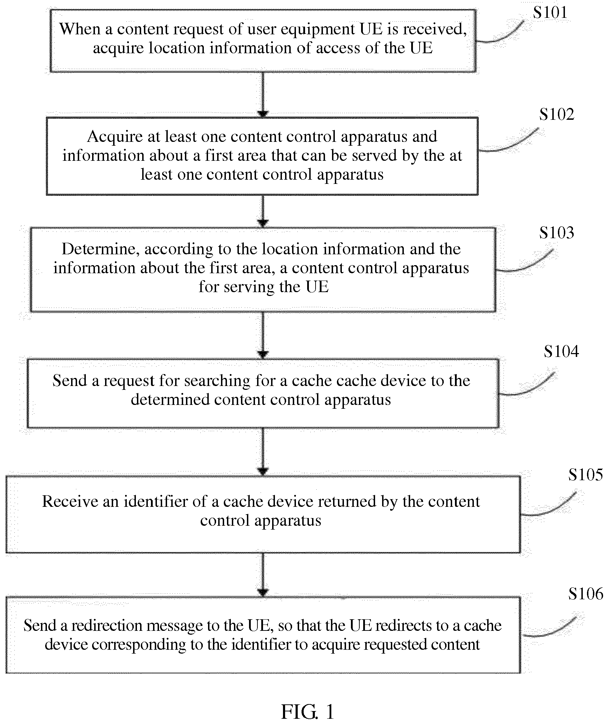

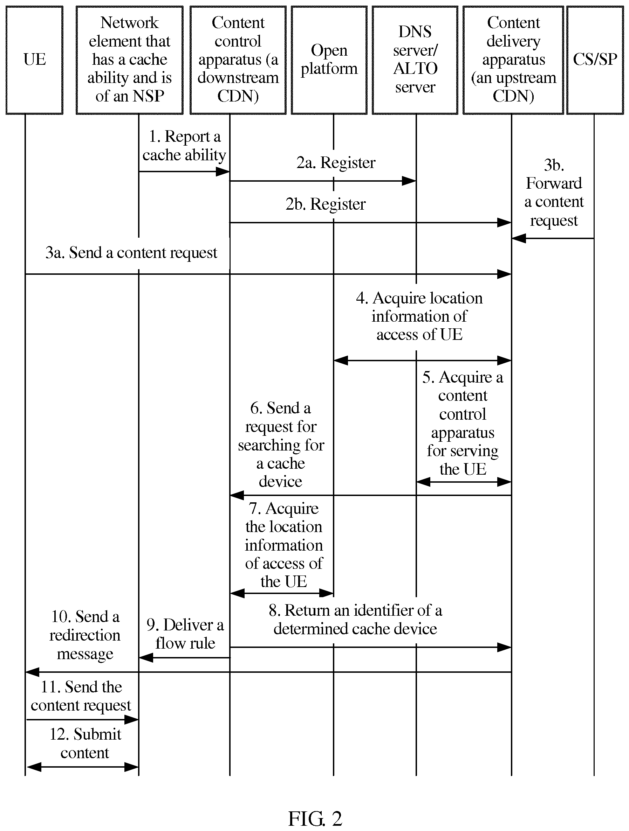

Referring to FIG. 1 and FIG. 2 together, which are respectively a schematic flowchart and a schematic interaction diagram of a content delivery method according to an embodiment of the present invention, this embodiment provides descriptions on a perspective of a content delivery apparatus (that is, an upstream CDN) of a content delivery network CDN provider, and the method includes steps S101 to S106.

S101. When a content request of user equipment UE is received, acquire location information of access of the UE.

In some embodiments of the present invention, a specific implementation manner of receiving the content request of the user equipment UE includes: directly receiving a content request from the UE, or receiving a content request of the UE forwarded by a content provider CP (Content provider) or a service provider SP (Service Provider). The content request carries an identifier (for example, a uniform resource locator URL (Uniform Resource Locator) or a uniform resource identifier URI (Uniform Resource Identifier)) of content requested by the UE. The identifier of the requested content indicates a location and an access method of a resource that can be obtained from the Internet, and is an address of a standard resource on the Internet. Each file on the Internet has a unique identifier, and information included in the unique identifier indicates a location of content requested by the UE and a method of processing the requested content by a browser of the UE.

The CP or the SP refers to a service provider that provides a large quantity of rich and practical information on the Internet. A product provided by the CP or the SP is a network content service, which includes a search engine, a virtual community, an email box, news and entertainment, and the like. The content provider or the service provider may allow access to a server of the service provider in various manners such as private line access and dial-up access, and provide various information services. After acquiring the content request of the UE, the CP or the SP forwards the content request to the content delivery apparatus, and the content delivery apparatus selects a cache device for serving the UE.

In some embodiments of the present invention, a specific implementation manner of acquiring the location information of access of the UE includes: invoking an application programming interface API provided by an open platform to acquire the location information of access of the UE, or invoking an API provided by the UE to acquire the location information of access of the UE. The API is some predefined functions, and a purpose is to provide, for an application program and a developer, an ability to access a routine based on software or hardware without accessing source code or understanding details of an internal working mechanism.

The location information of access of the UE includes a routing area (Routing Area, RA), a location area (Location Area, LA), a tracking area (Tracking Area, TA), a cell (Cell), or the like.

S102. Acquire at least one content control apparatus and information about a first area that can be served by the at least one content control apparatus, which specifically includes:
querying stored registration information of the at least one content control apparatus according to the location information, where the registration information includes identifier information of the content control apparatus and the information about the first area that can be served by the content control apparatus; or
sending a request for querying a content control apparatus to a domain name server DNS server or an application program transmission optimization server ALTO server, where the query request carries the location information of access of the UE, so that the DNS server or the ALTO server queries stored registration information of the at least one content control apparatus according to the location information, and the registration information includes identifier information of the content control apparatus and the information about the first area that can be served by the content control apparatus.

That is, the content control apparatus may submit a registration request to the content delivery apparatus, the DNS server, or the ALTO server, where the registration request includes the information about the first area that can be served by the content control apparatus. The content delivery apparatus, the DNS server, or the ALTO server configures, according to the submitted request, the identifier information of the corresponding content control apparatus and the information about the first area that can be served by the corresponding content control apparatus.

In another implementation manner, the content control apparatus may register with another control system such as an operation support system OSS (Operation Support System) or a business support system BSS (Business Support System) of an NSP. Similarly, registration information includes identifier information of the content control apparatus and information about an area that can be served by the content control apparatus. When the registration information of the content control apparatus needs to be acquired, the content delivery apparatus, the DNS server, or the ALTO server may send a query request to the OSS or the BSS, where the query request also carries the location information of access of the UE. The OSS or the BSS queries the stored registration information of the at least one content control apparatus according to the location information and returns the stored registration information to the content delivery apparatus, the DNS server, or the ALTO server.

It should be noted that the content control apparatus has a control logic function provided by the network service provider NSP (Network Service Provider), that is, a mobile network operator, and is mainly configured to search for and select a cache device. The identifier information of the content control apparatus includes address information (an IP address or a URL address) of the content control apparatus, a fully qualified domain name FQDN (Fully Qualified Domain Name), or the like. The information about the first area that can be served by the content control apparatus includes a routing area RA (Routing Area), a location area LA (Location Area), a tracking area TA (Tracking Area), a cell (cell), or the like that can be served by the content control apparatus.

S103. Determine, according to the location information and the information about the first area, a content control apparatus for serving the UE.

Specifically, in an implementation manner, the content delivery apparatus selects one content control apparatus from the at least one content control apparatus according to the location information and the information about the first area, and determines the content control apparatus as the content control apparatus for serving the UE, which may be specifically: selecting a content control apparatus whose service area is closest to the UE as the content control apparatus for serving the UE, that is, information about a first area that can be served by the selected content control apparatus includes the location information of access of the UE. Further, identifier information of the determined content control apparatus is acquired.

In another implementation manner, the content delivery apparatus receives the registration information of the at least one content control apparatus returned by the DNS server or the ALTO server, selects one content control apparatus from the at least one content control apparatus according to the location information and the information about the first area, and determines the content control apparatus as the content control apparatus for serving the UE. Further, receiving identifier information of the determined content control apparatus is included.

S104. Send a request for searching for a cache device to the determined content control apparatus.

It should be noted that the request for searching for a cache device is sent to the content control apparatus according to the identifier information of the content control apparatus, where the search request may carry identifier of the content requested by the UE. In an implementation manner, the search request further carries the location information of access of the UE. The content control apparatus stores a correspondence between an identifier of a cache device and information about an area that can be served by the cache device. The content control apparatus can select, according to the location information of access of the UE and the correspondence, a cache device as a cache device that provides the requested content. Specifically, the content control apparatus may determine, according to the location information and the correspondence, a cache device closest to the UE as the cache device that provides the requested content for the UE, and deliver a flow rule to the determined cache device, where the flow rule carries the identifier of the content requested by the UE, and the identifier is used to instruct the determined cache device to cache or submit the requested content when a content request that is of the UE and that is corresponding to the identifier is received.

In an implementation manner, if the content control apparatus determines multiple cache devices according to the location information of access of the UE, that is, information about areas that can be served by the multiple cache devices includes the location information of access of the UE. Further, it is queried whether the content corresponding to the identifier of the content requested by the UE is cached in these cache devices. If the content is cached in these cache devices, a cache device that caches the content requested by the UE is selected as a cache device that provides the requested content.

S105. Receive an identifier of a cache device returned by the content control apparatus.

Specifically, an identifier of the cache device determined by the content control apparatus according to the location information of access of the UE is received.

S106. Send a redirection message to the UE, so that the UE redirects to the cache device corresponding to the identifier to acquire requested content.

Specifically, the redirection message HTTP Redirect includes the identifier of the determined cache device. After receiving the redirection message, the UE re-sends a content request to the cache device according to identifier information of the cache device. The cache device acquires content according to an identifier that is of the requested content and carried in the content request, and sends the content to the UE. In this case, content submitting processing is completed.

In this embodiment of the present invention, a content delivery apparatus selects, according to an access location of UE, a content control apparatus to serve the UE; the selected content control apparatus reselects, for the UE, a cache device configured to provide requested content; and the UE can redirect to the cache device to acquire the requested content. Because the reselected cache device may be selected at a location close to the UE, a data interaction path between the UE and the cache device is shortened, which reduces transmission bandwidth of an operator network, shortens a transmission delay, thereby improving user experience. In addition, the content control apparatus for serving the UE is selected according to the access location of the UE, and in this way, the cache device selected by the selected content control apparatus belongs to an NSP accessed by a user, so that the selected cache device can provide a content service requested by the user. In addition, the content delivery apparatus controls whether to select a cache device of the network service provider to serve the UE, that is, a CP/SP controls whether to select a cache device of the NSP to serve the UE, thereby implementing layered control for a CDN. In addition, cache resources of the network service provider can be open to the content provider or the service provider, thereby implementing monetization processing of the cache resources and increasing income of the network service provider.

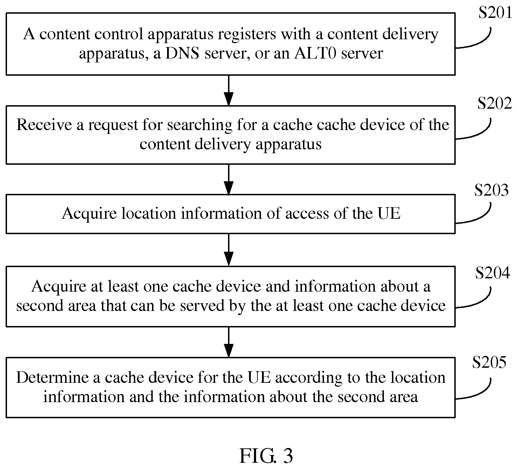

Referring to FIG. 2 and FIG. 3 together, which are respectively a schematic flowchart and a schematic interaction diagram of a content delivery method according to an embodiment of the present invention, this embodiment provides descriptions on a perspective of a content control apparatus (that is, a downstream CDN) of a network service provider NSP, and the method mainly includes steps S201 to S205.

S201. The content control apparatus registers with a content delivery apparatus, a domain name server DNS server, or an application program transmission optimization server ALTO server, which specifically includes:
sending registration information to the content delivery apparatus, where the registration information includes identifier information of the content control apparatus and information about a first area that can be served by the content control apparatus, so that the content delivery apparatus determines, according to location information of access of user equipment UE and the information about the first area, a content control apparatus for serving the UE; or
sending registration information to a domain name server DNS server or an application program transmission optimization server ALTO server, where the registration information includes identifier information of the content control apparatus and information about a first area that can be served by the content control apparatus, so that the DNS server or the ALTO server determines, according to location information of access of user equipment UE and the information about the first area, a content control apparatus for serving the UE.

That is, the content control apparatus may submit a registration request to the content delivery apparatus, the DNS server, or the ALTO server, where the registration request includes the information about the first area that can be served by the content control apparatus. The content delivery apparatus, the DNS server, or the ALTO server configures, according to the submitted request, the identifier information of the corresponding content control apparatus and the information about the first area that can be served by the corresponding content control apparatus.

In another implementation manner, the content control apparatus may register with another control system such as an operation support system OSS (Operation Support System) or a business support system BSS (Business Support System) of an NSP. Similarly, registration information includes identifier information of the content control apparatus and information about an area that can be served by the content control apparatus.

It should be noted that the content control apparatus has a control logic function provided by the network service provider NSP (Network Service Provider), that is, a mobile network operator, and is mainly configured to search for and select a cache device. The identifier information of the content control apparatus includes address information (an IP address or a URL address) of the content control apparatus, a fully qualified domain name FQDN (Fully Qualified Domain Name), or the like. The information about the first area that can be served by the content control apparatus includes a routing area RA (Routing Area), a location area LA (Location Area), a tracking area TA (Tracking Area), a cell (cell), or the like that can be served by the content control apparatus.

S202. Receive a request for searching for a cache device of the content delivery apparatus, where the cache device is configured to provide content requested by user equipment UE, and the search request may carry an identifier of the content requested by the UE.

In some implementation manners of the present invention, if the content control apparatus registers with the content delivery apparatus, the content delivery apparatus may acquire the identifier information of the content control apparatus according to the registration information and send the search request to the content control apparatus.

In some implementation manners of the present invention, if the content control apparatus registers with the domain name server DNS server or the application program transmission optimization server ALTO server, after acquiring an identifier of the content control apparatus from the DNS server or the ALTO server according to the location information of access of the UE, the content delivery apparatus sends the search request to the content control apparatus.

In some implementation manners of the present invention, if the content control apparatus registers with the OSS or the BSS, after acquiring the registration information of the content control apparatus from the OSS or the BSS, the content delivery apparatus sends the search request to the content control apparatus; or the DNS server or the ALTO server acquires the registration information of the content control apparatus from the OSS or the BSS, and after the content delivery apparatus acquires an identifier of the content control apparatus from the DNS server or the ALTO server according to the location information of access of the UE, the content delivery apparatus sends the search request to the content control apparatus.

S203. Acquire location information of access of the UE.

In some embodiments of the present invention, if the search request carries the location information of access of the UE, that is, the content delivery apparatus directly provides the location information of access of the UE for the content control apparatus, the content control apparatus may directly acquire, by parsing the search request, the location information of access of the user equipment UE.

In some embodiments of the present invention, if the search request does not carry the location information of access of the user equipment UE, the content control apparatus may acquire a location accessed by the UE in the following two implementation manners:
One of the two manners is invoking an application programming interface API provided by an open platform to acquire the location information of access of the UE; the other of the two manners is invoking an application programming interface API provided by the UE to acquire the location information of access of the UE. The API is some predefined functions, and a purpose is to provide, for an application program and a developer, an ability to access a routine based on software or hardware without accessing source code or understanding details of an internal working mechanism.

S204. Acquire at least one cache device and information about a second area that can be served by the at least one cache device.

Specifically, at least one cache device of a network element of the network service provider NSP and information about a second area that can be served by the at least one cache device are acquired. It should be noted that the content control apparatus needs to acquire in advance and store a cache ability of each network element of the NSP, that is, information about a cache device that has a cache ability of a network element, such as an access network element (for example, a radio network controller RNC (Radio Network Controller), a base station controller BSC (Base Station Controller), or an E-UTRAN NodeB eNodeB (E-UTRAN NodeB)), a gateway (for example, a gateway GPRS support node GGSN (Gateway GPRS Support Node) or a packet data network gateway PDN GW (Packet Data Network Gateway)), or a CDN, is sent to the content control apparatus.

The information about the second area that can be served by the at least one cache device includes a routing area RA (Routing Area), a location area LA (Location Area), a tracking area TA (Tracking Area), a cell (Cell), or the like that can be served by the cache device.

S205. Determine a cache device for the UE according to the location information and the information about the second area.

Specifically, a cache devices is selected, from the at least one cache device according to the location information and the information about the second area of the at least one cache device, as the cache device that provides the content requested by the UE.

It should be noted that cache devices of all network elements of the NSP may include a cache device of an access network, a cache device of a gateway, a cache device of a CDN, or the like, and each cache device has a cache ability to an extent. After acquiring cache ability information of a cache device, the content control apparatus selects, according to the location information of access of the UE and a correspondence between identifier information of a cache device and information about an area that can be served by the cache device, a cache device closest to the UE as the cache device for serving the UE, that is, the information about the second area that can be served by the cache device includes the location information of access of the UE.

In this implementation manner of the present invention, if at least two cache devices are selected, it is queried whether the content corresponding to the identifier of the content requested by the UE is already cached in the selected cache devices. If one of the cache devices caches the content, the cache device that caches the content requested by the UE is selected as the cache device that provides the content requested by the UE. If none of the at least two selected cache devices caches the content, a cache device closest to the UE is selected according to the location information as the cache device that provides the content requested by the UE.

Further, the content control apparatus further delivers instruction information to the determined cache device, where the instruction information carries the identifier of the content requested by the UE, and the instruction information is used to instruct the determined cache device to store the requested content or submit the requested content to the UE when a content request of the UE is received. After receiving the instruction information, if receiving the content request of the UE, the determined cache device accesses a corresponding site according to the identifier that is of the requested content and carried in the content request, and acquires and stores the requested content. Alternatively, if it is queried, according to the identifier that is of the requested content and carried in the content request, that the cache device has corresponding cache content, the cache content is submitted to the UE.

S206. Send an identifier corresponding to the determined cache device to the content delivery apparatus, so that the content delivery apparatus sends a redirection message to the UE, and the UE redirects to the cache device corresponding to the identifier to acquire the requested content.

It should be noted that the identifier corresponding to the determined cache device includes URL information or URI information of the cache device. After the content delivery apparatus receives the URL information or the URI information of the cache device, the redirection message HTTP Redirect sent to the UE includes the URL information or the URI information of the cache device. The cache device acquires the content requested by the UE from a content provider CP or a service provider SP and stores the content requested by the UE. The UE may redirect to a cache device corresponding to the URL information or the URI information according to the URL information or the URI information of the cache device in the redirection message. In this case, content submitting processing is completed.

In this embodiment of the present invention, a content delivery apparatus selects, according to an access location of UE, a content control apparatus to serve the UE; the selected content control apparatus reselects, for the UE, a cache device configured to provide requested content; and the UE can redirect to the cache device to acquire the requested content. Because the reselected cache device may be selected at a location close to the UE, a data interaction path between the UE and the cache device is shortened, which reduces transmission bandwidth of an operator network, shortens a transmission delay, thereby improving user experience. In addition, the content control apparatus for serving the UE is selected according to the access location of the UE, and in this way, the cache device selected by the selected content control apparatus belongs to an NSP accessed by a user, so that the selected cache device can provide a content service requested by the user. In addition, the content delivery apparatus controls whether to select a cache device of the network service provider to serve the UE, that is, a CP/SP controls whether to select a cache device of the NSP to serve the UE, thereby implementing layered control for a CDN. In addition, cache resources of the network service provider can be open to the content provider or the service provider, thereby implementing monetization processing of the cache resources and increasing income of the network service provider.

For better implementation of the foregoing solutions in the embodiments of the present invention, the following further provides related apparatuses cooperated to implement the foregoing solutions.

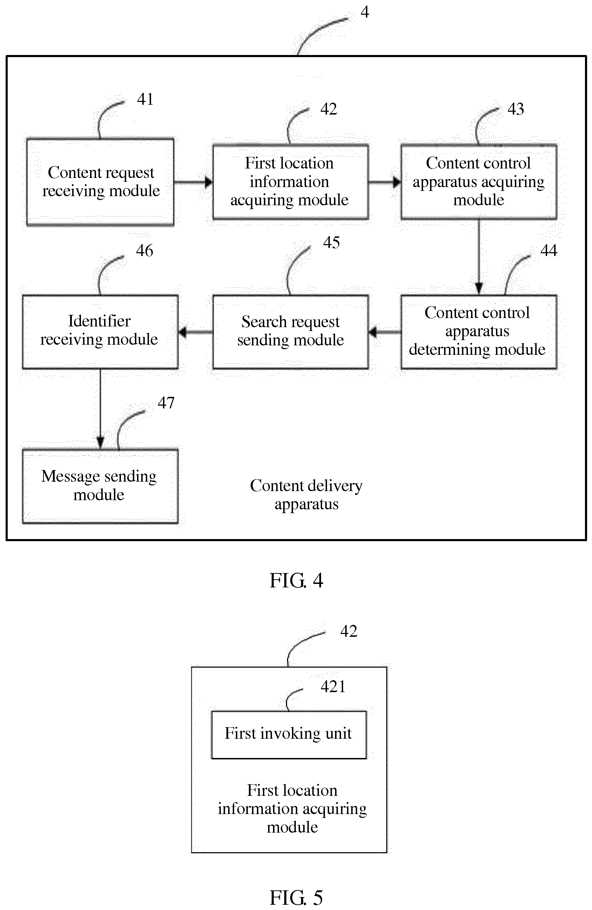

Referring to FIG. 4, FIG. 4 is a schematic structural diagram of a content delivery apparatus according to an embodiment of the present invention. A content delivery apparatus 4 (that is, an upstream CDN) is provided by a CDN provider, and the content delivery apparatus 4 includes a content request receiving module 41, a first location information acquiring module 42, a content control apparatus acquiring module 43, a content control apparatus determining module 44, a search request sending module 45, an identifier receiving module 46, and a message sending module 47. Working processes of all the modules are separately as follows:

The content request receiving module 41 is configured to receive a content request of user equipment UE forwarded by a content provider CP or a service provider SP, where the content request carries an identifier of content requested by the UE. Certainly, in another embodiment of the present invention, the content request receiving module may alternatively be configured to directly receive a content request from UE.

The content request carries the identifier (for example, a uniform resource locator URL (Uniform Resource Locator) or a uniform resource identifier URI (Uniform Resource Identifier)) of the content requested by the UE. The identifier of the requested content indicates a location and an access method of a resource that can be obtained from the Internet, and is an address of a standard resource on the Internet. Each file on the Internet has a unique identifier, and information included in the unique identifier indicates a location of content requested by the UE and a method of processing the requested content by a browser of the UE.

The CP or the SP refers to a service provider that provides a large quantity of rich and practical information on the Internet. A product provided by the CP or the SP is a network content service, which includes a search engine, a virtual community, an email box, news and entertainment, and the like. The content provider or the service provider may allow access to a server of the service provider in various manners such as private line access and dial-up access, and provide various information services. After acquiring the content request of the UE, the CP or the SP forwards the content request to the content delivery apparatus, and the content delivery apparatus selects a cache device for serving the UE.

The first location information acquiring module 42 is configured to: when the content request of the user equipment UE is received, acquire location information of access of the UE.

Referring to FIG. 5, in some embodiments of the present invention, the first location information acquiring module 42 includes a first invoking unit 421. The first invoking unit 421 is configured to invoke an application programming interface API provided by an open platform to acquire the location information of access of the UE.

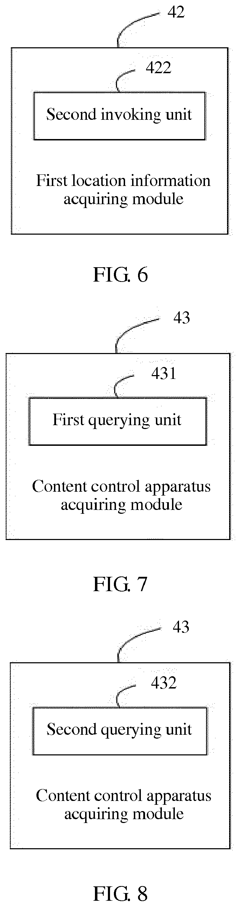

Referring to FIG. 6, in some embodiments of the present invention, the first location information acquiring module 42 includes a second invoking unit 422. The second invoking unit 422 is configured to invoke an application programming interface API provided by the UE to acquire the location information of access of the UE.

The API is some predefined functions, and a purpose is to provide, for an application program and a developer, an ability to access a routine based on software or hardware without accessing source code or understanding details of an internal working mechanism.

The content control apparatus acquiring module 43 is configured to acquire at least one content control apparatus and information about a first area that can be served by the at least one content control apparatus.

In an implementation manner of the present invention, referring to FIG. 7, the content control apparatus acquiring module 43 includes a first querying unit 431. The first querying unit 431 is configured to query stored registration information of the at least one content control apparatus according to the location information, where the registration information includes identifier information of the content control apparatus and the information about the first area that can be served by the content control apparatus.

In another implementation manner of the present invention, referring to FIG. 8, the content control apparatus acquiring module 43 includes a second querying unit 432. The second querying unit 432 is configured to send a request for querying a content control apparatus to a domain name server DNS server or an application program transmission optimization server ALTO server, where the query request carries the location information of access of the UE, so that the DNS server or the ALTO server queries stored registration information of the at least one content control apparatus according to the location information, and the registration information includes identifier information of the content control apparatus and the information about the first area that can be served by the content control apparatus.

That is, the content control apparatus may submit a registration request to the content delivery apparatus, the DNS server, or the ALTO server, where the registration request includes the information about the first area that can be served by the content control apparatus. The content delivery apparatus, the DNS server, or the ALTO server configures, according to the submitted request, the identifier information of the corresponding content control apparatus and the information about the first area that can be served by the corresponding content control apparatus.

In another implementation manner, the content control apparatus may register with another control system such as an operation support system OSS (Operation Support System) or a business support system BSS (Business Support System) of an NSP. Similarly, registration information includes identifier information of the content control apparatus and information about an area that can be served by the content control apparatus. When the registration information of the content control apparatus needs to be acquired, the content delivery apparatus, the DNS server, or the ALTO server may send a query request to the OSS or the BSS, where the query request also carries the location information of access of the UE. The OSS or the BSS queries the stored registration information of the at least one content control apparatus according to the location information and returns the stored registration information to the content delivery apparatus, the DNS server, or the ALTO server.

It should be noted that the content control apparatus has a control logic function provided by the network service provider NSP (Network Service Provider), that is, a mobile network operator, and is mainly configured to search for and select a cache device. The identifier information of the content control apparatus includes address information (an IP address or a URL address) of the content control apparatus, a fully qualified domain name FQDN (Fully Qualified Domain Name), or the like. The information about the first area that can be served by the content control apparatus includes a routing area RA (Routing Area), a location area LA (Location Area), a tracking area TA (Tracking Area), or the like that can be served by the content control apparatus.

The content control apparatus determining module 44 is configured to determine, according to the location information and the information about the first area, a content control apparatus for serving the UE.

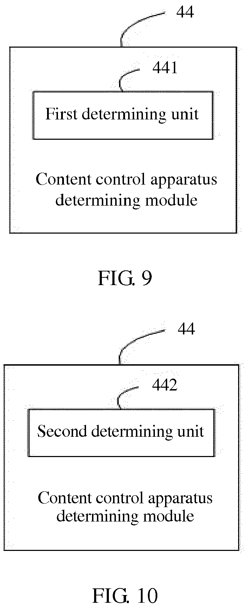

Referring to FIG. 9, in an embodiment of the present invention, the content control apparatus determining module 44 includes a first determining unit 441. The first determining unit 441 is configured to select one content control apparatus from the at least one content control apparatus according to the location information and the information about the first area, and determine the content control apparatus as the content control apparatus for serving the UE, which may be specifically: selecting, from the at least one content control apparatus, a content control apparatus whose service area is closest to the UE as the content control apparatus for serving the UE (that is, the information about the first area that can be served by the content control apparatus includes the location information of access of the UE). Further, identifier information of the determined content control apparatus is acquired.

Referring to FIG. 10, in another embodiment of the present invention, the content control apparatus determining module 44 includes a second determining unit 442. The second determining unit 442 is configured to: receive the registration information of the at least one content control apparatus returned by the DNS server or the ALTO server, select one content control apparatus from the at least one content control apparatus according to the location information and the information about the first area, and determine the content control apparatus as the content control apparatus for serving the UE. Further, receiving identifier information of the determined content control apparatus is included.

The search request sending module 45 is configured to send a request for searching for a cache device to the determined content control apparatus.

It should be noted that the request for searching for a cache device is sent to the content control apparatus according to the identifier information of the content control apparatus, where the search request may carry identifier of the content requested by the UE. In an implementation manner, the search request further carries the location information of access of the UE. The content control apparatus stores a correspondence between an identifier of a cache device and information about an area that can be served by the cache device. The content control apparatus can select, according to the location information of access of the UE and the correspondence, a cache device as a cache device that provides the requested content. Specifically, the content control apparatus may determine, according to the location information and the correspondence, a cache device closest to the UE as the cache device that provides the requested content for the UE, and deliver a flow rule to the determined cache device, where the flow rule carries the identifier of the content requested by the UE, and the identifier is used to instruct the determined cache device to cache or submit the requested content when a content request that is of the UE and that is corresponding to the identifier is received.

In an implementation manner, if the content control apparatus determines multiple cache devices according to the location information of access of the UE, that is, information about areas that can be served by the multiple cache devices includes the location information of access of the UE. Further, it is queried whether the content corresponding to the identifier of the content requested by the UE is cached in these cache devices. If the content is cached in these cache devices, a cache device that caches the content requested by the UE is selected as a cache device that provides the requested content.

The identifier receiving module 46 is configured to receive an identifier of a cache device returned by the content control apparatus.

Specifically, an identifier of the cache device determined by the content control apparatus according to the location information of access of the UE is received.

The message sending module 47 is configured to send a redirection message to the UE, so that the UE redirects to the cache device corresponding to the identifier to acquire the requested content.

Specifically, the redirection message HTTP Redirect includes the identifier of the determined cache device. After receiving the redirection message, the UE re-sends a content request to the cache device according to identifier information of the cache device. The cache device acquires content according to an identifier that is of the requested content and carried in the content request, and sends the content to the UE. In this case, content submitting processing is completed.

In this embodiment of the present invention, a content delivery apparatus selects, according to an access location of UE, a content control apparatus to serve the UE; the selected content control apparatus reselects, for the UE, a cache device configured to provide requested content; and the UE can redirect to the cache device to acquire the requested content. Because the reselected cache device may be selected at a location close to the UE, a data interaction path between the UE and the cache device is shortened, which reduces transmission bandwidth of an operator network, thereby improving user experience. In addition, the content control apparatus for serving the UE is selected according to the access location of the UE, and in this way, the cache device selected by the selected content control apparatus belongs to an NSP accessed by a user, so that the selected cache device can provide a content service requested by the user. In addition, the content delivery apparatus controls whether to select a cache device of the network service provider to serve the UE, that is, a CP/SP controls whether to select a cache device of the NSP to serve the UE, thereby implementing layered control for a CDN. In addition, cache resources of the network service provider can be open to the content provider or the service provider, thereby implementing monetization processing of the cache resources and increasing income of the network service provider.

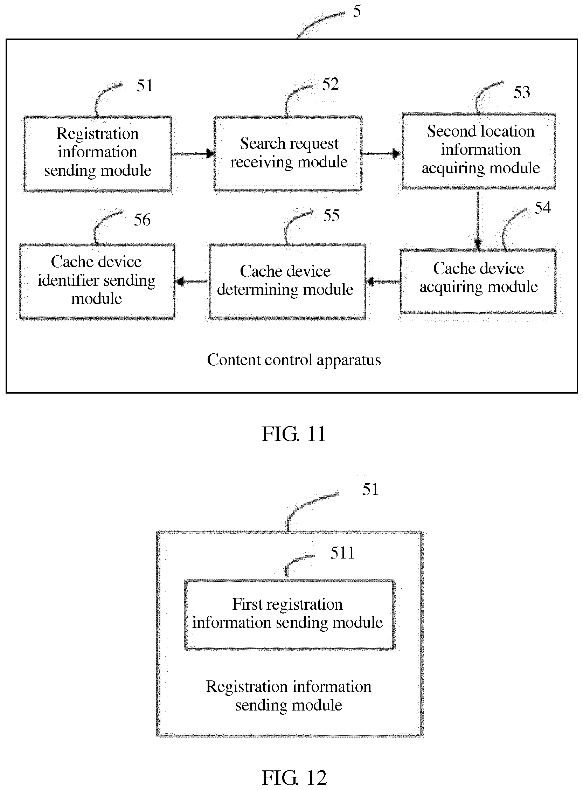

Referring to FIG. 11, FIG. 11 is a schematic structural diagram of a content control apparatus 5 according to an embodiment of the present invention. The content control apparatus 5 (that is, a downstream CDN) includes a registration information sending module 51, a search request receiving module 52, a second location information acquiring module 53, a cache device acquiring module 54, a cache device determining module 55, and a cache device identifier sending module 56.

In an implementation manner of the present invention, referring to FIG. 12, the registration information sending module 51 includes a first registration information sending module 511. The first registration information sending module 511 is configured to send registration information to a content delivery apparatus, where the registration information includes identifier information of the content control apparatus and information about a first area that can be served by the content control apparatus, so that the content delivery apparatus determines, according to location information of access of user equipment UE and the information about the first area, a content control apparatus for serving the UE.

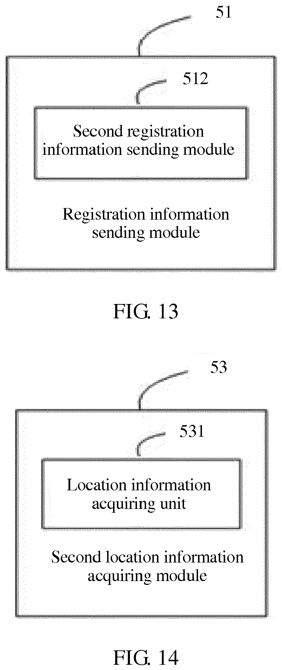

Alternatively, in another implementation manner of the present invention, referring to FIG. 13, the registration information sending module 51 includes a second registration information sending module 512. The second registration information sending module 512 is configured to send registration information to a domain name server DNS server or an application program transmission optimization server ALTO server, where the registration information includes identifier information of the content control apparatus and information about a first area that can be served by the content control apparatus, so that the DNS server or the ALTO server determines, according to location information of access of user equipment UE and the information about the first area, a content control apparatus for serving the UE.

That is, the content control apparatus may submit a registration request to the content delivery apparatus, the DNS server, or the ALTO server, where the registration request includes the information about the first area that can be served by the content control apparatus. The content delivery apparatus, the DNS server, or the ALTO server configures, according to the submitted request, the identifier information of the corresponding content control apparatus and the information about the first area that can be served by the corresponding content control apparatus.

In another implementation manner, the content control apparatus may register with another control system such as an operation support system OSS (Operation Support System) or a business support system BSS (Business Support System) of an NSP. Similarly, registration information includes identifier information of the content control apparatus and information about an area that can be served by the content control apparatus.

It should be noted that the content control apparatus has a control logic function provided by the network service provider NSP (Network Service Provider), that is, a mobile network operator, and is mainly configured to search for and select a cache device. The identifier information of the content control apparatus includes address information (an IP address or a URL address) of the content control apparatus, a fully qualified domain name FQDN (Fully Qualified Domain Name), or the like. The information about the first area that can be served by the content control apparatus includes a routing area RA (Routing Area), a location area LA (Location Area), a tracking area TA (Tracking Area), a cell (cell), or the like that can be served by the content control apparatus.

The search request receiving module 52 is configured to receive a request for searching for a cache device sent by the content delivery apparatus, where the cache device is configured to provide content requested by the user equipment UE.

In some implementation manners of the present invention, if the first registration information sending module 511 registers with the content delivery apparatus, the content delivery apparatus may acquire the identifier information of the content control apparatus according to the registration information and send the search request to the request receiving module 52.

In some implementation manners of the present invention, if the second registration information sending module 512 registers with the domain name server DNS server or the application program transmission optimization server ALTO server, after acquiring the identifier information of the content control apparatus from the DNS server or the ALTO server according to the location information of access of the UE, the content delivery apparatus sends the search request to the search request receiving module 52.

In some implementation manners of the present invention, if the content control apparatus registers with the OSS or the BSS, after acquiring the registration information of the content control apparatus from the OSS or the BSS, the content delivery apparatus sends the search request to the content control apparatus; or the DNS server or the ALTO server acquires the registration information of the content control apparatus from the OSS or the BSS, and after the content delivery apparatus acquires the identifier information of the content control apparatus from the DNS server or the ALTO server according to the location information of access of the UE, the content delivery apparatus sends the search request to the search request sending module 52.

The second location information acquiring module 53 is configured to acquire the location information of access of the UE.

In some implementation manners of the present invention, if the search request carries the location information of access of the user equipment UE, that is, the content delivery apparatus directly provides the location information of access of the UE for the content control apparatus 5, referring to FIG. 14, the second location information acquiring module 53 includes a location information acquiring unit 531, and the location information acquiring unit 531 is configured to parse the search request to acquire the location information of access of the user equipment UE.

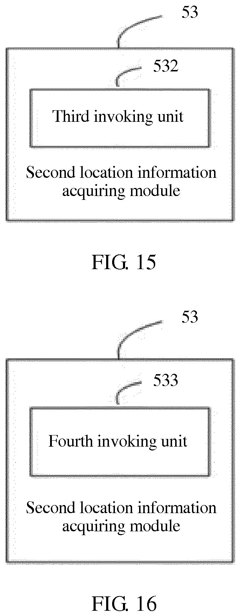

In some embodiments of the present invention, if the search request does not carry the location information of access of the user equipment UE, referring to FIG. 15, the second location information acquiring module 53 includes a third invoking unit 532, and the third invoking unit 532 is configured to invoke an application programming interface API provided by an open platform to acquire the location information of access of the UE. Alternatively, referring to FIG. 16, the second location information acquiring module 53 includes a fourth invoking unit 533, and the fourth invoking unit 533 is configured to invoke an application programming interface API provided by the UE to acquire the location information of access of the UE.

The API is some predefined functions, and a purpose is to provide, for an application program and a developer, an ability to access a routine based on software or hardware without accessing source code or understanding details of an internal working mechanism.

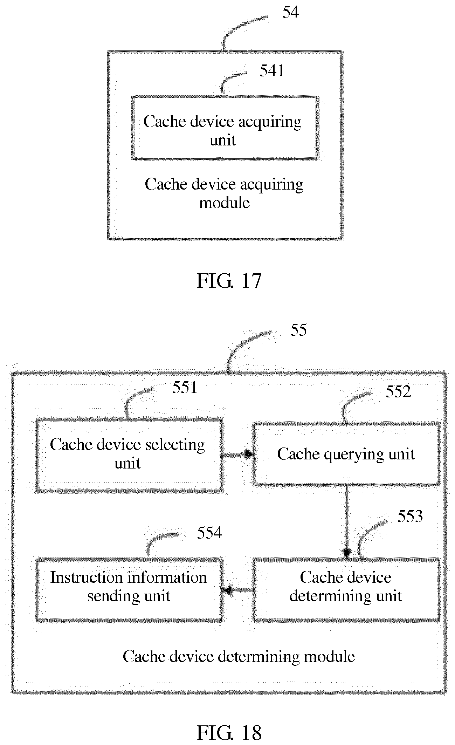

The cache device acquiring module 54 is configured to acquire at least one cache device and information about a second area that can be served by the at least one cache device. Specifically, referring to FIG. 17, the cache device acquiring module 54 includes a cache device acquiring unit 541, and the cache device acquiring unit 541 is configured to acquire at least one cache device of a network element of the network service provider NSP and information about a second area that can be served by the at least one cache device.

It should be noted that the content control apparatus needs to acquire in advance and store a cache ability of each network element of the NSP, that is, information about a cache device that has a cache ability of a network element, such as an access network element (for example, a radio network controller RNC (Radio Network Controller), a base station controller BSC (Base Station Controller), or an E-UTRAN NodeB eNodeB (E-UTRAN NodeB)), a gateway (for example, a gateway GPRS support node GGSN (Gateway GPRS Support Node) or a packet data network gateway PDN GW (Packet Data Network Gateway)), or a CDN, is sent to the content control apparatus.

The cache device determining module 55 is configured to determine a cache device for the UE according to the location information and the information about the second area, where the foregoing request for searching for a cache device includes an identifier of the content requested by the UE. Referring to FIG. 18, the cache device determining module 55 includes a cache device selecting unit 551, a cache querying unit 552, a cache device determining unit 553, and an instruction information sending unit 554.

The cache device selecting unit 551 is configured to select, according to the location information and the information about the second area of the at least one cache device, a cache device from the at least one cache device as the cache device that provides the content requested by the UE.

It should be noted that cache devices of all network elements of the NSP may include a cache device of an access network, a cache device of a gateway, a cache device of a CDN, or the like, and each cache device has a cache ability to an extent. After acquiring cache ability information of a cache device, the content control apparatus selects, according to the location information of access of the UE and a correspondence between identifier information of a cache device and information about an area that can be served by the cache device, a cache device closest to the UE as the cache device for serving UE.

The cache querying unit 552 is configured to: when at least two cache devices are selected, query whether the content corresponding to the identifier of the content requested by the UE is already cached in the selected cache devices.

The cache device determining unit 553 is configured to: select a cache device that caches the content requested by the UE as the cache device that provides the content requested by the UE; and if none of the at least two selected cache devices caches the content, select, according to the location information, a cache device closest to the UE as the cache device that provides the content requested by the UE.

The instruction information sending unit 554 is configured to deliver instruction information to the determined cache device, where the instruction information carries the identifier of the content requested by the UE, and the instruction information is used to instruct the cache device to store the requested content or submit the requested content to the UE when a content request corresponding to the identifier is received. After receiving the instruction information, if receiving the content request of the UE, the determined cache device accesses a corresponding site according to the identifier that is of the requested content and carried in the content request, and acquires and stores the requested content. Alternatively, if it is queried, according to the identifier that is of the requested content and carried in the content request, that the cache device has corresponding cache content, the cache content is submitted to the UE.

The cache device identifier sending module 56 is configured to send an identifier corresponding to the determined cache device to the content delivery apparatus, so that the content delivery apparatus sends a redirection message to the UE, and the UE redirects to the cache device corresponding to the identifier to acquire the requested content.

It should be noted that the identifier corresponding to the determined cache device includes URL information or URI information of the cache device. After the content delivery apparatus receives the URL information or the URI information of the cache device, the redirection message HTTP Redirect sent to the UE includes the URL information or the URI information of the cache device. The cache device acquires the content requested by the UE from a content provider CP or a service provider SP and stores the content requested by the UE. The UE may redirect to a cache device corresponding to the URL information or the URI information according to the URL information or the URI information of the cache device in the redirection message. In this case, content submitting processing is completed.

In this embodiment of the present invention, a content delivery apparatus selects, according to an access location of UE, a content control apparatus to serve the UE; the selected content control apparatus reselects, for the UE, a cache device configured to provide requested content; and the UE can redirect to the cache device to acquire the requested content. Because the reselected cache device may be selected at a location close to the UE, a data interaction path between the UE and the cache device is shortened, which reduces transmission bandwidth of an operator network, thereby improving user experience. In addition, the content control apparatus for serving the UE is selected according to the access location of the UE, and in this way, the cache device selected by the selected content control apparatus belongs to an NSP accessed by a user, so that the selected cache device can provide a content service requested by the user. In addition, the content delivery apparatus controls whether to select a cache device of the network service provider to serve the UE, that is, a CP/SP controls whether to select a cache device of the NSP to serve the UE, thereby implementing layered control for a CDN. In addition, cache resources of the network service provider can be open to the content provider or the service provider, thereby implementing monetization processing of the cache resources and increasing income of the network service provider.

An embodiment of the present invention provides a content delivery system, which includes the content delivery apparatus described in FIG. 4 to FIG. 10 and the content control apparatus described in FIG. 11 to FIG. 18. For a process of interaction between the content delivery apparatus and the content control apparatus, reference may be made to the foregoing embodiments, and details are not described herein again.

An embodiment of the present invention provides a computer storage medium, where the computer storage medium stores a first program, and the first program performs steps of the content delivery method shown in FIG. 1.

An embodiment of the present invention further provides another computer storage medium, where the computer storage medium stores a second program, and the second program performs steps of the content delivery method shown in FIG. 2.

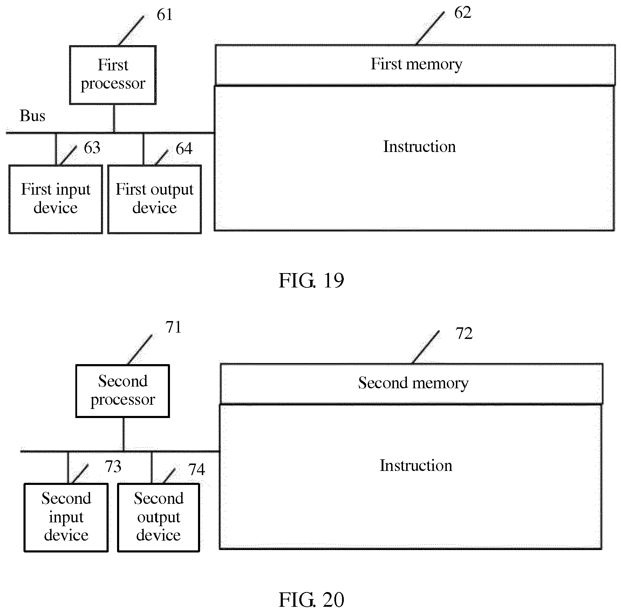

Referring to FIG. 19, an embodiment of the present invention further provides a content delivery apparatus, which includes a first processor 61 (a quantity of first processors 61 may be one or more, and one first processor 61 is used as an example in FIG. 19), a first memory 62, a first input device 63, and a first output device 64. The first processor 61, the first memory 62, the first input device 63, and the first output device 64 may be connected by using a bus or in another manner, where in FIG. 16, connecting by using a bus is used as an example. The first memory 62 stores a program to be executed by the processor 61.

The first processor 61 performs the following steps:
when a content request of user equipment UE is received, acquire location information of access of the UE;
acquire at least one content control apparatus and information about a first area that can be served by the at least one content control apparatus;
determine, according to the location information and the information about the first area, a content control apparatus for serving the UE;
send a request for searching for a cache device to the determined content control apparatus;
receive an identifier of a cache device returned by the content control apparatus; and
send a redirection message to the UE, so that the UE redirects to the cache device corresponding to the identifier to acquire requested content.

That the first processor receives the content request of the user equipment UE includes:
controlling the first input device to receive a content request of the user equipment UE forwarded by a content provider CP or a service provider SP.

In some embodiments of the present invention, that the first processor acquires the location information of access of the UE includes:
invoking an application programming interface API provided by an open platform to acquire the location information of access of the UE; or
invoking an application programming interface API provided by the UE to acquire the location information of access of the UE.

In some embodiments of the present invention, the acquiring at least one content control apparatus and information about a first area that can be served by the at least one content control apparatus includes:
querying stored registration information of the at least one content control apparatus according to the location information, where the registration information includes identifier information of the content control apparatus and the information about the first area that can be served by the content control apparatus; and
the determining, according to the location information and the information about the first area, a content control apparatus for serving the UE includes:
   selecting one content control apparatus from the at least one content control apparatus according to the location information and the information about the first area, and determining the content control apparatus as the content control apparatus for serving the UE.

In some embodiments of the present invention, that the first processor acquires the at least one content control apparatus and the information about the first area that can be served by the at least one content control apparatus includes:
sending a request for querying a content control apparatus to a domain name server DNS server or an application program transmission optimization server ALTO server, where the query request carries the location information of access of the UE, so that the DNS server or the ALTO server queries stored registration information of the at least one content control apparatus according to the location information, and the registration information includes identifier information of the content control apparatus and the information about the first area that can be served by the content control apparatus; and
the determining, according to the location information and the information about the first area, a content control apparatus for serving the UE includes:
   receiving the registration information of the at least one content control apparatus returned by the DNS server or the ALTO server, selecting one content control apparatus from the at least one content control apparatus according to the location information and the information about the first area, and determining the content control apparatus as the content control apparatus for serving the UE.

In this embodiment of the present invention, a content delivery apparatus selects, according to an access location of UE, a content control apparatus to serve the UE; the selected content control apparatus reselects, for the UE, a cache device configured to provide requested content; and the UE can redirect to the cache device to acquire the requested content. Because the reselected cache device may be selected at a location close to the UE, a data interaction path between the UE and the cache device is shortened, which reduces transmission bandwidth of an operator network, thereby improving user experience. In addition, the content control apparatus for serving the UE is selected according to the access location of the UE, and in this way, the cache device selected by the selected content control apparatus belongs to an NSP accessed by a user, so that the selected cache device can provide a content service requested by the user. In addition, the content delivery apparatus controls whether to select a cache device of the network service provider to serve the UE, that is, a CP/SP controls whether to select a cache device of the NSP to serve the UE, thereby implementing layered control for a CDN. In addition, cache resources of the network service provider can be open to the content provider or the service provider, thereby implementing monetization processing of the cache resources and increasing income of the network service provider.

Referring to FIG. 20, an embodiment of the present invention further provides a content control apparatus, which includes a second processor 71 (a quantity of second processors 71 may be one or more, and one processor is used as an example in FIG. 20), a second memory 72, a second input device 73, and a second output device 74. The second processor 71, the second memory 72, the second input device 73, and the second output device 74 may be connected by using a bus or in another manner, where in FIG. 17, connecting by using a bus is used as an example. The second memory 72 stores a program to be executed by the second processor 71.

The second processor 71 performs the following steps:
receive a request for searching for a cache device sent by a content delivery apparatus, where the cache device is configured to provide content requested by user equipment UE;
acquire location information of access of the UE;
acquire at least one cache device and information about a second area that can be served by the at least one cache device;
determine a cache device for the UE according to the location information and the information about the second area; and
send an identifier corresponding to the determined cache device to the content delivery apparatus, so that the content delivery apparatus sends a redirection message to the UE, and the UE redirects to the cache device corresponding to the identifier to acquire the requested content.

The search request carries the location information of access of the user equipment UE; and
that the second processor acquires the location information of access of the UE includes:
parsing the search request to acquire the location information of access of the user equipment UE.

In some embodiments of the present invention, that the second processor acquires the location information of access of the UE includes:
invoking an application programming interface API provided by an open platform to acquire the location information of access of the UE; or
invoking an application programming interface API provided by the UE to acquire the location information of access of the UE.

In some embodiments of the present invention, before receiving the request for searching for a cache device of the content delivery apparatus, the second processor is further configured to:
send registration information to the content delivery apparatus, where the registration information includes identifier information of the content control apparatus and information about a first area that can be served by the content control apparatus, so that the content delivery apparatus determines, according to the location information of access of the user equipment UE and the information about the first area, a content control apparatus for serving the UE; or
send registration information to a domain name server DNS server or an application program transmission optimization server ALTO server, where the registration information includes identifier information of the content control apparatus and information about a first area that can be served by the content control apparatus, so that the DNS server or the ALTO server determines, according to the location information of access of the user equipment UE and the information about the first area, a content control apparatus for serving the UE.

In some embodiments of the present invention, that the second processor acquires the at least one cache device and the information about the second area that can be served by the at least one cache device includes:
acquiring at least one cache device of a network element of a network service provider NSP and information about a second area that can be served by the at least one cache device.

In some embodiments of the present invention, the request for searching for a cache device includes an identifier of the content requested by the UE; and
that the second processor determines the cache device for the UE according to the location information and the information about the second area includes:
selecting, according to the location information and the information about the second area of the at least one cache device, a cache device from the at least one cache device as the cache device that provides the content requested by the UE;
if at least two cache devices are selected, querying whether the content corresponding to the identifier of the content requested by the UE is already cached in the selected cache devices; and
selecting, a cache device that caches the content requested by the UE as the cache device that provides the content requested by the UE.

In some embodiments of the present invention, that the second processor determines the cache device for the UE further includes:
delivering instruction information to the determined cache device, where the instruction information carries the identifier of the content requested by the UE, and the instruction information is used to instruct the cache device to store the requested content or submit the requested content to the UE when a content request corresponding to the identifier is received.

In this embodiment of the present invention, a content delivery apparatus selects, according to an access location of UE, a content control apparatus to serve the UE; the selected content control apparatus reselects, for the UE, a cache device configured to provide requested content; and the UE can redirect to the cache device to acquire the requested content. Because the reselected cache device may be selected at a location close to the UE, a data interaction path between the UE and the cache device is shortened, which reduces transmission bandwidth of an operator network, thereby improving user experience. In addition, the content control apparatus for serving the UE is selected according to the access location of the UE, and in this way, the cache device selected by the selected content control apparatus belongs to an NSP accessed by a user, so that the selected cache device can provide a content service requested by the user. In addition, the content delivery apparatus controls whether to select a cache device of the network service provider to serve the UE, that is, a CP/SP controls whether to select a cache device of the NSP to serve the UE, thereby implementing layered control for a CDN. In addition, cache resources of the network service provider can be open to the content provider or the service provider, thereby implementing monetization processing of the cache resources and increasing income of the network service provider.

With descriptions of the foregoing implementation manners, a person skilled in the art may clearly understand that the present invention may be implemented by hardware, firmware or a combination thereof. When the present invention is implemented by software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a computer. The following provides an example but does not impose a limitation: The computer-readable medium may include a RAM, a ROM, an EEPROM, a CD-ROM, or another optical disc storage or disk storage medium, or another magnetic storage device, or any other medium that can carry or store expected program code in a form of an instruction or a data structure and can be accessed by a computer. In addition, any connection may be appropriately defined as a computer-readable medium. For example, if software is transmitted from a website, a server or another remote source by using a coaxial cable, an optical fiber/cable, a twisted pair, a digital subscriber line (DSL) or wireless technologies such as infrared ray, radio and microwave, the coaxial cable, optical fiber/cable, twisted pair, DSL or wireless technologies such as infrared ray, radio and microwave are included in fixation of a medium to which they belong. For example, a disk (Disk) and disc (disc) used by the present invention includes a compact disc CD, a laser disc, an optical disc, a digital versatile disc (DVD), a floppy disk and a Blu-ray disc, where the disk generally copies data by a magnetic means, and the disc copies data optically by a laser means. The foregoing combination should also be included in the protection scope of the computer-readable medium.

What is disclosed above is merely exemplary embodiments of the present invention, and certainly is not intended to limit the protection scope of the present invention.

## Claims

1. A content delivery method, performed by a content delivery apparatus of a Content Delivery Network, CDN, provider, said method comprising:
receiving a content request of a user equipment, UE;
when the content request is received, acquiring location information of access of the UE; wherein the location information of access of the UE includes a routing area, a location area, a tracking area, or a cell;
acquiring at least one content control apparatus and information about a respective first area that can be served by each of the at least one content control apparatus, wherein each of the at least one content control apparatus is a gateway in a mobile network;
determining, according to the location information and the information about the first area, a content control apparatus for serving the UE, wherein the information about the first area that can be served by the determined content control apparatus includes the location information of access of the UE;
sending a request for searching for a cache device to the determined content control apparatus, wherein the request carries the location information of access of the UE, and wherein the cache device is a cache device of an access network of a mobile network;
receiving, in response to the request, an identifier of a cache device returned by the content control apparatus, wherein the cache device belongs to a mobile network accessed by the UE; and
sending a redirection message to the UE, so that the UE redirects the content request to the cache device corresponding to the identifier to acquire requested content, wherein the redirection message includes the identifier.

2. The content delivery method according to claim 1, wherein the acquiring at least one content control apparatus and information about a first area that can be served by the at least one content control apparatus comprises:
querying stored registration information of the at least one content control apparatus according to the location information, wherein the registration information comprises identifier information of the content control apparatus and the information about the first area that can be served by the content control apparatus; and
the determining, according to the location information and the information about the first area, a content control apparatus for serving the UE comprises:
selecting one content control apparatus from the at least one content control apparatus according to the location information and the information about the first area, and determining the content control apparatus as the content control apparatus for serving the UE.

3. The content delivery method according to any one of claims 1 to 2, wherein the acquiring at least one content control apparatus and information about a first area that can be served by the at least one content control apparatus comprises:
sending a request for querying a content control apparatus to a domain name server, DNS server, or an application layer traffic optimization server, ALTO server, wherein the query request carries the location information of access of the UE, so that the DNS server or the ALTO server queries stored registration information of the at least one content control apparatus according to the location information, and the registration information comprises identifier information of the content control apparatus and the information about the first area that can be served by the content control apparatus; and
the determining, according to the location information and the information about the first area, a content control apparatus for serving the UE comprises:
receiving the registration information of the at least one content control apparatus returned by the DNS server or the ALTO server, selecting one content control apparatus from the at least one content control apparatus according to the location information and the information about the first area, and determining the content control apparatus as the content control apparatus for serving the UE.

4. A content delivery method, performed by a content control apparatus, said content control apparatus being a gateway in a mobile network, said method comprising:
receiving a request for searching for a cache device sent by a content delivery apparatus of a Content Delivery Network, CDN, provider, wherein the request carries the location information of access of a user equipment, UE, and wherein the cache device is a cache device of an access network of a mobile network;
acquiring the location information of access of UE by parsing the request; wherein the location information of access of the UE includes a routing area, a location area, a tracking area, or a cell;
acquiring at least one cache device and information about a respective second area that can be served by each of the at least one cache device;
determining a cache device for the UE according to the location information and the information about the second area, wherein the determined cache device belongs to a mobile network accessed by the UE, and wherein the information about the second area that can be served by the determined cache device includes the location information of access of the UE; and
sending an identifier corresponding to the determined cache device to the content delivery apparatus, so that the content delivery apparatus sends a redirection message to the UE, and the UE redirects to the cache device corresponding to the identifier to acquire requested content.

5. The content delivery method according to claim 4, before the receiving a request for searching for a cache device sent by a content delivery apparatus, further comprising:
sending registration information to the content delivery apparatus, wherein the registration information comprises identifier information of a content control apparatus and information about a first area that can be served by the content control apparatus, so that the content delivery apparatus determines, according to the location information of access of the user equipment UE and the information about the first area, a content control apparatus for serving the UE; or
sending registration information to a domain name server, DNS server, or an application layer traffic optimization server, ALTO server, wherein the registration information comprises identifier information of the content control apparatus and information about a first area that can be served by the content control apparatus, so that the DNS server or the ALTO server determines, according to the location information of access of the user equipment UE and the information about the first area, a content control apparatus for serving the UE.

6. The content delivery method according to claim 4, wherein the request for searching for a cache device comprises an identifier of the content requested by the UE; and
the determining a cache device for the UE according to the location information and the information about the second area comprises:
selecting, according to the location information and the information about the second area that can be served by the at least one cache device, a cache device from the at least one cache device as the cache device that provides the content requested by the UE;
if at least two cache devices are selected, querying whether the content corresponding to the identifier of the content requested by the UE is already cached in the selected cache devices; and
selecting a cache device that caches the content requested by the UE as the cache device that provides the content requested by the UE.

7. The content delivery method according to any one of claim 4 to 6, wherein the determining a cache device for the UE further comprises:
delivering instruction information to the determined cache device, wherein the instruction information carries the identifier of the content requested by the UE, and the instruction information is used to instruct the cache device to store the requested content or submit the requested content to the UE when a content request corresponding to the identifier is received.

8. A content delivery apparatus of a Content Delivery Network, CDN, provider, the content delivery apparatus comprising:
a content request receiving module (41), configured to receive a content request of a user equipment, UE;
a first location information acquiring module (42), configured to: when the content request of user equipment UE is received, acquire location information of access of the UE; wherein the location information of access of the UE includes a routing area, a location area, a tracking area, or a cell;
a content control apparatus acquiring module (43), configured to acquire at least one content control apparatus and information about a respective first area that can be served by each of the at least one content control apparatus; wherein each of the at least one content control apparatus is a gateway in a mobile network;
a content control apparatus determining module (44), configured to determine, according to the location information and the information about the first area, a content control apparatus, wherein the information about the first area that can be served by the determined content control apparatus includes the location information of access of the UE;
a search request sending module (45), configured to send a request for searching for a cache device to the determined content control apparatus, wherein the request carries the location information of access of the UE, and wherein the cache device is a cache device of an access network of a mobile network;
an identifier receiving module (46), configured to receive, in response to the request, an identifier of a cache device returned by the content control apparatus, wherein the cache device belongs to a mobile network accessed by the UE; and
a message sending module (47), configured to send a redirection message to the UE, so that the UE redirects the content request to the cache device corresponding to the identifier to acquire requested content, wherein the redirection message includes the identifier.

9. The content delivery apparatus according to claim 8, wherein the content control apparatus acquiring module comprises:
a first querying unit (431), configured to query stored registration information of the at least one content control apparatus according to the location information, wherein the registration information comprises identifier information of the content control apparatus and the information about the first area that can be served by the content control apparatus; and
the content control apparatus determining module comprises:
a first determining unit (441), configured to select one content control apparatus from the at least one content control apparatus according to the location information and the information about the first area, and determine the content control apparatus as the content control apparatus for serving the UE.

10. The content delivery apparatus according to any one of claims 8 to 9, wherein the content control apparatus acquiring module comprises:
a second querying unit (432), configured to send a request for querying a content control apparatus to a domain name server, DNS server, or an application layer traffic optimization server, ALTO server, wherein the query request carries the location information of access of the UE, so that the DNS server or the ALTO server queries stored registration information of the at least one content control apparatus according to the location information, and the registration information comprises identifier information of the content control apparatus and the information about the first area that can be served by the content control apparatus; and
the content control apparatus determining module comprises:
a second determining unit (442), configured to: receive the registration information of the at least one content control apparatus returned by the DNS server or the ALTO server, select one content control apparatus from the at least one content control apparatus according to the location information and the information about the first area, and determine the content control apparatus as the content control apparatus for serving the UE.

11. A content control apparatus being a gateway in a mobile network, the content control apparatus comprising:
a search request receiving module (52), configured to receive a request for searching for a cache device sent by a content delivery apparatus of a Content Delivery Network, CDN, provider, wherein the request carries the location information of access of a user equipment, UE, and wherein the cache device is a cache device of an access network of a mobile network;
a second location information acquiring module (53), configured to acquire the location information of access of UE by parsing the request; wherein the location information of access of the UE includes a routing area, a location area, a tracking area, or a cell;
a cache device acquiring module (54), configured to acquire at least one cache device and information about a respective second area that can be served by each of the at least one cache device;
a cache device determining module (55), configured to determine a cache device for the UE according to the location information and the information about the second area, wherein the determined cache device belongs to a mobile network accessed by the UE, and wherein the information about the second area that can be served by the determined cache device includes the location information of access of the UE; and
a cache device identifier sending module (56), configured to send an identifier corresponding to the determined cache device to the content delivery apparatus, so that the content delivery apparatus sends a redirection message to the UE, and the UE redirects to the cache device corresponding to the identifier to acquire requested content.

12. The content control apparatus according to claim 11, further comprising:
a first registration information sending module (511), configured to send registration information to the content delivery apparatus, wherein the registration information comprises identifier information of the content control apparatus and information about a first area that can be served by the content control apparatus, so that the content delivery apparatus determines, according to the location information of access of the user equipment UE and the information about the first area, a content control apparatus for serving the UE; or
a second registration information sending module (512), configured to send registration information to a domain name server, DNS server, or an application layer traffic optimization server, ALTO server, wherein the registration information comprises identifier information of the content control apparatus and information about a first area that can be served by the content control apparatus, so that the DNS server or the ALTO server determines, according to the location information of access of the user equipment UE and the information about the first area, a content control apparatus for serving the UE.

13. The content control apparatus according to claim 11, wherein the request for searching for a cache device comprises an identifier of the content requested by the UE; and
the cache device determining module comprises:
a cache device selecting unit (551), configured to select, according to the location information and the information about the second area that can be served by the at least one cache device, a cache device from the at least one cache device as the cache device that provides the content requested by the UE;
a cache querying unit (552), configured to: when at least two cache devices are selected, query whether the content corresponding to the identifier of the content requested by the UE is already cached in the selected cache devices; and
a cache device determining unit (553), configured to select a cache device that caches the content requested by the UE as the cache device that provides the content requested by the UE.

14. The content control apparatus according to any one of claims 11 to 13, wherein the cache device determining module further comprises:
an instruction information sending unit (554), configured to deliver instruction information to the determined cache device, wherein the instruction information carries the identifier of the content requested by the UE, and the instruction information is used to instruct the cache device to store the requested content or submit the requested content to the UE when a content request corresponding to the identifier is received.

15. A content delivery system, comprising the content delivery apparatus according to any one of claims 8 to 10 and the content control apparatus according to any one of claims 11 to 14.

## Patentansprüche

1. Verfahren zur Bereitstellung von Inhalten, das durch eine Vorrichtung zur Bereitstellung von Inhalten eines Anbieters eines Netzes zur Bereitstellung von Inhalten, CDN-Anbieter, durchgeführt wird, wobei das Verfahren Folgendes umfasst:
Empfangen einer Inhaltsanforderung von einem Anwendergerät, UE;
dann, wenn die Inhaltsanforderung empfangen wird, Erfassen von Standortdaten des Zugriffs des UE; wobei die Standortdaten des Zugriffs des UE einen Routing-Bereich, einen Standortbereich, einen Verfolgungsbereich oder eine Zelle enthalten;
Erfassen mindestens einer Vorrichtung zur Steuerung von Inhalten und von Informationen über einen entsprechenden ersten Bereich, der durch jede der mindestens einen Vorrichtung zur Steuerung von Inhalten bedient werden kann, wobei jede der mindestens einen Vorrichtung zur Steuerung von Inhalten ein Gateway in ein Mobilfunknetz ist;
Bestimmen gemäß den Standortinformationen und den Informationen über den ersten Bereich einer Vorrichtung zur Steuerung von Inhalten zum Bedienen des UE, wobei die Informationen über den ersten Bereich, der durch die bestimmte Vorrichtung zur Steuerung von Inhalten bedient werden kann, die Standortinformationen des Zugriffs des UE enthalten;
Senden einer Anforderung zum Suchen einer Zwischenspeichereinrichtung zur bestimmten Vorrichtung zur Steuerung von Inhalten, wobei die Anforderung die Standortinformationen des Zugriffs des UE führt und die Zwischenspeichereinrichtung eine Zwischenspeichereinrichtung eines Zugriffsnetzes eines Mobilfunknetzes ist;
Empfangen als Antwort auf die Anforderung einer Kennung einer Zwischenspeichereinrichtung, die durch die Vorrichtung zur Steuerung von Inhalten zurückgegeben wurde, wobei die Zwischenspeichereinrichtung einem Mobilfunknetz angehört, auf das durch das UE zugegriffen wurde; und
Senden einer Umleitungsnachricht zum UE, derart, dass das UE die Inhaltsanforderung zur Zwischenspeichereinrichtung, die der Kennung entspricht, umleitet, um die angeforderten Inhalte zu erfassen, wobei die Umleitungsnachricht die Kennung enthält.

2. Verfahren zur Bereitstellung von Inhalten nach Anspruch 1, wobei das Erfassen mindestens einer Vorrichtung zur Steuerung von Inhalten und Informationen über einen ersten Bereich, der durch die mindestens eine Vorrichtung zur Steuerung von Inhalten bedient werden kann, Folgendes umfasst:
Abfragen gespeicherter Registrierungsinformationen der mindestens einen Vorrichtung zur Steuerung von Inhalten gemäß den Standortinformationen, wobei die Registrierungsinformationen Kennungsinformationen der Vorrichtung zur Steuerung von Inhalten und die Informationen über den ersten Bereich, der durch die Vorrichtung zur Steuerung von Inhalten bedient werden kann, enthalten; und
das Bestimmen gemäß den Standortinformationen und den Informationen über den ersten Bereich einer Vorrichtung zur Steuerung von Inhalten zum Bedienen des UE, Folgendes umfasst:
Wählen einer Vorrichtung zur Steuerung von Inhalten aus der mindestens einen Vorrichtung zur Steuerung von Inhalten gemäß den Standortinformationen und den Informationen über den ersten Bereich und Bestimmen der Vorrichtung zur Steuerung von Inhalten als die Vorrichtung zur Steuerung von Inhalten zum Bedienen des UE.

3. Verfahren zur Bereitstellung von Inhalten nach einem der Ansprüche 1 bis 2, wobei das Erfassen mindestens einer Vorrichtung zur Steuerung von Inhalten und Informationen über einen ersten Bereich, der durch die mindestens eine Vorrichtung zur Steuerung von Inhalten bedient werden kann, Folgendes umfasst:
Senden einer Anforderung zum Abfragen einer Vorrichtung zur Steuerung von Inhalten zu einem Domänennamen-Server, DNS-Server, oder einem Anwendungsschichtverkehrsoptimierungs-Server, ALTO-Server, wobei die Abfrageanforderung die Standortinformationen des Zugriffs des UE führt, derart, dass der DNS-Server oder der ALTO-Server gespeicherte Registrierungsinformationen der mindestens einen Vorrichtung zur Steuerung von Inhalten gemäß den Standortinformationen abfragt und die Registrierungsinformationen Kennungsinformationen der Vorrichtung zur Steuerung von Inhalten und die Informationen über den ersten Bereich, der durch die Vorrichtung zur Steuerung von Inhalten bedient werden kann, umfassen; und
das Bestimmen gemäß den Standortinformationen und den Informationen über den ersten Bereich einer Vorrichtung zur Steuerung von Inhalten zum Bedienen des UE Folgendes umfasst:
Empfangen der Registrierungsinformationen der mindestens einen Vorrichtung zur Steuerung von Inhalten, die durch den DNS-Server oder den ALTO-Server zurückgegeben werden, Wählen einer Vorrichtung zur Steuerung von Inhalten aus der mindestens einen Vorrichtung zur Steuerung von Inhalten gemäß den Standortinformationen und den Informationen über den ersten Bereich und Bestimmen der Vorrichtung zur Steuerung von Inhalten als die Vorrichtung zur Steuerung von Inhalten zum Bedienen des UE.

4. Verfahren zur Bereitstellung von Inhalten, das durch eine Vorrichtung zur Steuerung von Inhalten durchgeführt wird, wobei die Vorrichtung zur Steuerung von Inhalten ein Gateway in einem Mobilfunknetz ist, wobei das Verfahren Folgendes umfasst:
Empfangen einer Anforderung zum Suchen einer Zwischenspeichereinrichtung, die durch eine Vorrichtung zur Bereitstellung von Inhalten eines Anbieters eines Netzes zur Bereitstellung von Inhalten, CDN-Anbieter, gesendet wurde, wobei die Anforderung die Standortinformationen des Zugriffs eines Anwendergerätes, UE, führt und die Zwischenspeichereinrichtung eine Zwischenspeichereinrichtung eines Zugriffsnetzes eines Mobilfunknetzes ist;
Erfassen der Standortinformationen des Zugriffs des UE durch Parsen der Anforderung; wobei die Standortinformationen des Zugriffs des UE einen Routing-Bereich, einen Standortbereich, einen Verfolgungsbereich oder eine Zelle enthalten;
Erfassen mindestens einer Zwischenspeichereinrichtung und von Informationen über einen entsprechenden zweiten Bereich, der durch jede der mindestens einen Zwischenspeichereinrichtung bedient werden kann;
Bestimmen einer Zwischenspeichereinrichtung für das UE gemäß den Standortinformationen und den Informationen über den zweiten Bereich, wobei die bestimmte Zwischenspeichereinrichtung einem Mobilfunknetz, auf das durch das UE zugegriffen wird, angehört und die Informationen über den zweiten Bereich, der durch die bestimmte Zwischenspeichereinrichtung bedient werden kann, die Standortinformationen des Zugriffs des UE enthalten; und
Senden einer Kennung, die der bestimmten Zwischenspeichereinrichtung entspricht, zur Vorrichtung zur Bereitstellung von Inhalten, derart, dass die Vorrichtung zur Bereitstellung von Inhalten eine Umleitungsnachricht zum UE sendet und das UE zur Zwischenspeichereinrichtung, die der Kennung entspricht, weiterleitet, um den angeforderten Inhalt zu erfassen.

5. Verfahren zur Bereitstellung von Inhalten nach Anspruch 4, das vor dem Empfangen einer Anforderung zum Suchen einer Zwischenspeichereinrichtung, die durch eine Vorrichtung zur Bereitstellung von Inhalten gesendet wurde, ferner Folgendes umfasst:
Senden von Registrierungsinformationen zur Vorrichtung zur Bereitstellung von Inhalten, wobei die Registrierungsinformationen Kennungsinformationen einer Vorrichtung zur Steuerung von Inhalten und Informationen über einen ersten Bereich, der durch die Vorrichtung zur Steuerung von Inhalten bedient werden kann, enthalten, derart, dass die Vorrichtung zur Bereitstellung von Inhalten gemäß den Standortinformationen des Zugriffs des Anwendergerätes, UE, und den Informationen über den ersten Bereich eine Vorrichtung zur Steuerung von Inhalten zum Bedienen des UE bestimmt; oder
Senden von Registrierungsinformationen zu einem Domänennamen-Server, DNS-Server, oder einem Anwendungsschichtverkehrsoptimierungs-Server, ALTO-Server, wobei die Registrierungsinformationen Kennungsinformationen einer Vorrichtung zur Steuerung von Inhalten und Informationen über einen ersten Bereich, der durch die Vorrichtung zur Steuerung von Inhalten bedient werden kann, enthalten, derart, dass der DNS-Server oder der ALTO-Server gemäß den Standortinformationen des Zugriffs des Anwendergerätes, UE, und den Informationen über den ersten Bereich eine Vorrichtung zur Steuerung von Inhalten zum Bedienen des UE bestimmt.

6. Verfahren zur Bereitstellung von Inhalten nach Anspruch 4, wobei die Anforderung zum Suchen einer Zwischenspeichereinrichtung eine Kennung des Inhalts, der durch das UE angefordert wurde, umfasst; und
das Bestimmen einer Zwischenspeichereinrichtung für das UE gemäß den Standortinformationen und den Informationen über den zweiten Bereich Folgendes umfasst:
Wählen gemäß den Standortinformationen und den Informationen über den zweiten Bereich, der durch die mindestens eine Zwischenspeichereinrichtung bedient werden kann, einer Zwischenspeichereinrichtung aus der mindestens einen Zwischenspeichereinrichtung als die Zwischenspeichereinrichtung, die den Inhalt, der durch das UE angefordert wurde, bereitstellt;
dann, wenn mindestens zwei Zwischenspeichereinrichtungen gewählt werden, Abfragen, ob der Inhalt, der der Kennung des Inhalts, der durch das UE angefordert wurde, entspricht, bereits in den gewählten Zwischenspeichereinrichtungen zwischengespeichert ist; und
Wählen einer Zwischenspeichereinrichtung, die den Inhalt zwischenspeichert, der durch das UE angefordert wurde, als die Zwischenspeichereinrichtung, die die durch das UE angeforderten Inhalte bereitstellt.

7. Verfahren zur Bereitstellung von Inhalten nach einem der Ansprüche 4 bis 6, wobei das Bestimmen einer Zwischenspeichereinrichtung für das UE ferner Folgendes umfasst:
Bereitstellen von Anweisungsinformationen zur bestimmten Zwischenspeichereinrichtung, wobei die Anweisungsinformationen die Kennung des Inhalts, der durch das UE angefordert wurde, führen und die Anweisungsinformationen verwendet werden, die Zwischenspeichereinrichtung anzuweisen, den angeforderten Inhalt bereitzustellen oder den angeforderten Inhalt zur UE zu übermitteln, wenn eine Inhaltsanforderung, die der Kennung entspricht, empfangen wird.

8. Vorrichtung zur Bereitstellung von Inhalten eines Anbieters eines Netzes zur Bereitstellung von Inhalten, CDN-Anbieter, wobei die Vorrichtung zur Bereitstellung von Inhalten Folgendes umfasst:
ein Inhaltsanforderungsempfangsmodul (41), das konfiguriert ist, eine Inhaltsanforderung eines Anwendergeräts, UE, zu empfangen;
ein erstes Standortinformationserfassungsmodul (42), das konfiguriert ist, dann, wenn die Inhaltsanforderung des Anwendergeräts, UE, empfangen wird, Standortinformationen des Zugriffs des UE zu erfassen; wobei die Standortinformationen des Zugriffs des UE einen Routing-Bereich, einen Standortbereich, einen Verfolgungsbereich oder ein Zelle enthalten;
ein Erfassungsmodul (43) für Vorrichtungen zur Steuerung von Inhalten, das konfiguriert ist, mindestens eine Vorrichtung zur Steuerung von Inhalten und Informationen über einen entsprechenden ersten Bereich, der durch jede der mindestens einen Vorrichtung zur Steuerung von Inhalten bedient werden kann, zu erfassen; wobei jede der mindestens einen Vorrichtung zur Steuerung von Inhalten ein Gateway in einem Mobilfunknetz ist;
ein Bestimmungsmodul (44) für Vorrichtungen zur Steuerung von Inhalten, das konfiguriert ist, gemäß den Standortinformationen und den Informationen über den ersten Bereich eine Vorrichtung zur Steuerung von Inhalten zu bestimmen, wobei die Informationen über den ersten Bereich, der durch die bestimmte Vorrichtung zur Steuerung von Inhalten bedient werden kann, die Standortinformationen des Zugriffs des UE enthalten;
ein Suchanforderungssendemodul (45), das konfiguriert ist, eine Anforderung zum Suchen einer Zwischenspeichereinrichtung zur bestimmten Vorrichtung zur Steuerung von Inhalten zu senden, wobei die Anforderung die Standortinformationen des Zugriffs des UE führt und die Zwischenspeichereinrichtung eine Zwischenspeichereinrichtung eines Zugriffsnetzes eines Mobilfunknetzes ist;
ein Kennungsempfangsmodul (46), das konfiguriert ist, als Antwort auf die Anforderung eine Kennung einer Zwischenspeichereinrichtung, die durch die Vorrichtung zur Steuerung von Inhalten zurückgegeben wurde, zu empfangen, wobei die Zwischenspeichereinrichtung einem Mobilfunknetz angehört, auf das durch das UE zugegriffen wurde; und
ein Nachrichtensendemodul (47), das konfiguriert ist, eine Umleitungsnachricht zum UE zu senden, derart, dass das UE die Inhaltsanforderung zur Zwischenspeichereinrichtung, die der Kennung entspricht, umleitet, um die angeforderten Inhalte zu erfassen, wobei die Umleitungsnachricht die Kennung enthält.

9. Vorrichtung zur Bereitstellung von Inhalten nach Anspruch 8, wobei das Erfassungsmodul für Vorrichtungen zur Steuerung von Inhalten Folgendes umfasst:
eine erste Abfrageeinheit (431), die konfiguriert ist, gespeicherte Registrierungsinformationen der mindestens einen Vorrichtung zur Steuerung von Inhalten gemäß den Standortinformationen abzufragen, wobei die Registrierungsinformationen Kennungsinformationen der Vorrichtung zur Steuerung von Inhalten und die Informationen über den ersten Bereich, der durch die Vorrichtung zur Steuerung von Inhalten bedient werden kann, umfassen; und
das Bestimmungsmodul für Vorrichtungen zur Steuerung von Inhalten Folgendes umfasst:
eine erste Bestimmungseinheit (441), die konfiguriert ist, eine Vorrichtung zur Steuerung von Inhalten aus der mindestens einen Vorrichtung zur Steuerung von Inhalten gemäß den Standortinformationen und den Informationen über den ersten Bereich zu wählen und die Vorrichtung zur Steuerung von Inhalten als die Vorrichtung zur Steuerung von Inhalten zum Bedienen des UE zu bestimmen.

10. Vorrichtung zur Bereitstellung von Inhalten nach einem der Ansprüche 8 bis 9, wobei das Erfassungsmodul für Vorrichtungen zur Steuerung von Inhalten Folgendes umfasst:
eine zweite Abfrageeinheit (432), die konfiguriert ist, eine Anforderung zum Abfragen einer Vorrichtung zur Steuerung von Inhalten zu einem Domänennamen-Server, DNS-Server, oder einem Anwendungsschichtverkehrsoptimierungs-Server, ALTO-Server zu senden, wobei die Abfrageanforderung die Standortinformationen des Zugriffs des UE führt, derart, dass der DNS-Server oder der ALTO-Server gespeicherte Registrierungsinformationen der mindestens einen Vorrichtung zur Steuerung von Inhalten gemäß den Standortinformationen abfragt und die Registrierungsinformationen Kennungsinformationen der Vorrichtung zur Steuerung von Inhalten und die Informationen über den ersten Bereich, der durch die Vorrichtung zur Steuerung von Inhalten bedient werden kann, umfassen; und
das Bestimmungsmodul für Vorrichtungen zur Steuerung von Inhalten Folgendes umfasst:
eine zweite Bestimmungseinheit (442), die konfiguriert ist, die Registrierungsinformationen der mindestens einen Vorrichtung zur Steuerung von Inhalten, die durch den DNS-Server oder den ALTO-Server zurückgegeben werden, zu empfangen, eine Vorrichtung zur Steuerung von Inhalten aus der mindestens einen Vorrichtung zur Steuerung von Inhalten gemäß den Standortinformationen und den Informationen über den ersten Bereich zu wählen und die Vorrichtung zur Steuerung von Inhalten als die Vorrichtung zur Steuerung von Inhalten zum Bedienen des UE zu bestimmen.

11. Vorrichtung zur Steuerung von Inhalten, die ein Gateway in einem Mobilfunknetz ist, wobei die Vorrichtung zur Steuerung von Inhalten Folgendes umfasst:
ein Suchanforderungsempfangsmodul (52), das konfiguriert ist, eine Anforderung zum Suchen einer Zwischenspeichereinrichtung, die durch eine Vorrichtung zur Bereitstellung von Inhalten eines Anbieters eines Netzes zur Bereitstellung von Inhalten, CDN-Anbieter, gesendet wurde, zu empfangen, wobei die Anforderung die Standortinformationen des Zugriffs eines Anwendergerätes, UE, führt und die Zwischenspeichereinrichtung eine Zwischenspeichereinrichtung eines Zugriffsnetzes eines Mobilfunknetzes ist;
ein zweites Standortinformationserfassungsmodul (53), das konfiguriert ist, die Standortinformationen des Zugriffs des UE durch Parsen der Anforderung zu erfassen; wobei die Standortinformationen des Zugriffs des UE einen Routing-Bereich, einen Standortbereich, einen Verfolgungsbereich oder eine Zelle enthalten;
ein Zwischenspeichereinrichtungserfassungsmodul (54), das konfiguriert ist, mindestens eine Zwischenspeichereinrichtung und Informationen über einen entsprechenden zweiten Bereich, der durch jede der mindestens einen Zwischenspeichereinrichtung bedient werden kann, zu erfassen;
ein Zwischenspeichereinrichtungsbestimmungsmodul (55), das konfiguriert ist, eine Zwischenspeichereinrichtung für das UE gemäß den Standortinformationen und den Informationen über den zweiten Bereich zu bestimmen, wobei die bestimmte Zwischenspeichereinrichtung einem Mobilfunknetz, auf das durch das UE zugegriffen wird, angehört und die Informationen über den zweiten Bereich, der durch die bestimmte Zwischenspeichereinrichtung bedient werden kann, die Standortinformationen des Zugriffs des UE enthalten; und
ein Zwischenspeicherkennungssendemodul (56), das konfiguriert ist, eine Kennung, die der bestimmten Zwischenspeichereinrichtung entspricht, zur Vorrichtung zur Bereitstellung von Inhalten zu senden, derart, dass die Vorrichtung zur Bereitstellung von Inhalten eine Umleitungsnachricht zum UE sendet und das UE zur Zwischenspeichereinrichtung, die der Kennung entspricht, weiterleitet, um den angeforderten Inhalt zu erfassen.

12. Vorrichtung zur Steuerung von Inhalten nach Anspruch 11, die ferner Folgendes umfasst:
ein erstes Registrierungsinformationssendemodul (511), das konfiguriert ist, Registrierungsinformationen zur Vorrichtung zur Bereitstellung von Inhalten zu senden, wobei die Registrierungsinformationen Kennungsinformationen der Vorrichtung zur Steuerung von Inhalten und Informationen über einen ersten Bereich, der durch die Vorrichtung zur Steuerung von Inhalten bedient werden kann, umfassen, derart, dass die Vorrichtung zur Bereitstellung von Inhalten gemäß den Standortinformationen des Zugriffs des Anwendergerätes, UE, und den Informationen über den ersten Bereich eine Vorrichtung zur Steuerung von Inhalten zum Bedienen des UE bestimmt; oder
ein zweites Registrierungsinformationssendemodul (512), das konfiguriert ist, Registrierungsinformationen zu einem Domänennamen-Server, DNS-Server, oder einem Anwendungsschichtverkehrsoptimierungs-Server, ALTO-Server zu senden, wobei die Registrierungsinformationen Kennungsinformationen der Vorrichtung zur Steuerung von Inhalten und Informationen über einen ersten Bereich, der durch die Vorrichtung zur Steuerung von Inhalten bedient werden kann, enthalten, derart, dass der DNS-Server oder der ALTO-Server gemäß den Standortinformationen des Zugriffs des Anwendergerätes, UE, und den Informationen über den ersten Bereich eine Vorrichtung zur Steuerung von Inhalten zum Bedienen des UE bestimmt.

13. Vorrichtung zur Steuerung von Inhalten nach Anspruch 11, wobei die Anforderung zum Suchen einer Zwischenspeichereinrichtung eine Kennung des Inhalts, der durch das UE angefordert wurde, umfasst; und
das Zwischenspeichereinrichtungsbestimmungsmodul Folgendes umfasst:
eine Zwischenspeicherwahleinheit (551), die konfiguriert ist, gemäß den Standortinformationen und den Informationen über den zweiten Bereich, der durch die mindestens eine Zwischenspeichereinrichtung bedient werden kann, eine Zwischenspeichereinrichtung aus der mindestens einen Zwischenspeichereinrichtung als die Zwischenspeichereinrichtung zu wählen, die den Inhalt, der durch das UE angefordert wurde, bereitstellt;
eine Zwischenspeicherabfrageeinheit (552), die konfiguriert ist, dann, wenn mindestens zwei Zwischenspeichereinrichtungen gewählt werden, abzufragen, ob der Inhalt, der der Kennung des Inhalts, der durch das UE angefordert wurde, entspricht, bereits in den gewählten Zwischenspeichereinrichtungen zwischengespeichert ist; und
eine Zwischenspeichereinrichtungsbestimmungseinheit (553), die konfiguriert ist, eine Zwischenspeichereinrichtung, die den Inhalt zwischenspeichert, der durch das UE angefordert wurde, als die Zwischenspeichereinrichtung, die die durch das UE angeforderten Inhalte bereitstellt, zu wählen.

14. Vorrichtung zur Steuerung von Inhalten nach einem der Ansprüche 11 bis 13, wobei das Zwischenspeichereinrichtungsbestimmungsmodul ferner Folgendes umfasst:
eine Anweisungsinformationssendeeinheit (554), die konfiguriert ist, Anweisungsinformationen zur bestimmten Zwischenspeichereinrichtung bereitzustellen, wobei die Anweisungsinformationen die Kennung des Inhalts, der durch das UE angefordert wurde, führen und die Anweisungsinformationen verwendet werden, die Zwischenspeichereinrichtung anzuweisen, den angeforderten Inhalt bereitzustellen oder den angeforderten Inhalt zur UE zu übermitteln, wenn eine Inhaltsanforderung, die der Kennung entspricht, empfangen wird.

15. System zur Bereitstellung von Inhalten, das die Vorrichtung zur Bereitstellung von Inhalten nach einem der Ansprüche 8 bis 10 und die Vorrichtung zur Steuerung von Inhalten nach einem der Ansprüche 11 bis 14 umfasst.

## Revendications

1. Procédé de distribution de contenu, réalisé par un appareil de distribution de contenu d'un fournisseur de réseau de distribution de contenu, CDN, ledit procédé comprenant :
la réception d'une demande de contenu d'un équipement d'utilisateur, UE ;
lors de la réception de la demande de contenu, l'acquisition des informations de position d'accès de l'UE ; les informations de position d'accès de l'UE comprenant une zone d'acheminement, une zone de localisation, une zone de suivi ou une cellule ;
l'acquisition d'au moins un appareil de commande de contenu et d'informations sur une première zone respective qui peut être desservie par chacun des au moins un appareil de commande de contenu, chacun des au moins un appareil de commande de contenu étant une passerelle dans un réseau mobile ;
la détermination, en fonction des informations de position et des informations sur la première zone, d'un appareil de commande de contenu pour desservir l'UE, les informations sur la première zone qui peut être desservie par l'appareil de commande de contenu déterminé comprenant les informations de position d'accès de l'UE ;
l'envoi d'une demande de recherche d'un dispositif cache à l'appareil de commande de contenu déterminé, la demande portant les informations de position d'accès de l'UE, et le dispositif cache étant un dispositif cache d'un réseau d'accès d'un réseau mobile ;
la réception, en réponse à la demande, d'un identifiant d'un dispositif cache renvoyé par l'appareil de commande de contenu, le dispositif cache appartenant à un réseau mobile auquel l'UE accède ; et
l'envoi d'un message de redirection à l'UE, de sorte que l'UE redirige la demande de contenu au dispositif cache correspondant à l'identifiant pour acquérir le contenu demandé, le message de redirection comprenant l'identifiant.

2. Procédé de distribution de contenu selon la revendication 1, l'acquisition d'au moins un appareil de commande de contenu et d'informations sur une première zone qui peut être desservie par l'au moins un appareil de commande de contenu comprenant :
l'interrogation des informations d'enregistrement stockées de l'au moins un appareil de commande de contenu en fonction des informations de position, les informations d'enregistrement comprenant des informations d'identification de l'appareil de commande de contenu et les informations sur la première zone qui peut être desservie par l'appareil de commande de contenu, et
la détermination, en fonction des informations de position et des informations sur la première zone, d'un appareil de commande de contenu pour desservir l'UE comprenant :
la sélection d'un appareil de commande de contenu parmi l'au moins un appareil de commande de contenu en fonction des informations de position et des informations sur la première zone, et la détermination de l'appareil de commande de contenu comme appareil de commande de contenu pour desservir l'UE.

3. Procédé de distribution de contenu selon l'une quelconque des revendications 1 à 2, l'acquisition d'au moins un appareil de commande de contenu et d'informations sur une première zone qui peut être desservie par l'au moins un appareil de commande de contenu comprenant :
l'envoi d'une requête pour interroger un appareil de commande de contenu à un serveur de nom de domaine, un serveur DNS ou un serveur d'optimisation de trafic de couche d'application, serveur ALTO, la requête d'interrogation portant les informations de position d'accès de l'UE, de sorte que le serveur DNS ou le serveur ALTO interroge les informations d'enregistrement stockées de l'au moins un appareil de commande de contenu en fonction des informations de position, et les informations d'enregistrement comprenant les informations d'identification de l'appareil de commande de contenu et les informations sur la première zone qui peut être desservie par l'appareil de commande de contenu ; et
la détermination, en fonction des informations de position et des informations sur la première zone, d'un appareil de commande de contenu pour desservir l'UE comprenant :
la réception des informations d'enregistrement de l'au moins un appareil de commande de contenu renvoyé par le serveur DNS ou le serveur ALTO, la sélection d'un appareil de commande de contenu parmi l'au moins un appareil de commande de contenu en fonction des informations de position et des informations sur la première zone, et la détermination de l'appareil de commande de contenu comme appareil de commande de contenu pour desservir l'UE.

4. Procédé de distribution de contenu, réalisé par un appareil de commande de contenu, ledit appareil de commande de contenu étant une passerelle dans un réseau mobile, ledit procédé comprenant :
la réception d'une demande de recherche d'un dispositif cache envoyé par un appareil de distribution de contenu d'un fournisseur de réseau de distribution de contenu, CDN, la demande portant les informations de position d'accès d'un équipement d'utilisateur, UE, et le dispositif cache étant un dispositif cache d'un réseau d'accès d'un réseau mobile ;
l'acquisition des informations de position d'accès de l'UE par l'analyse de la demande ; les informations de position d'accès de l'UE comprenant une zone d'acheminement, une zone de localisation, une zone de suivi ou une cellule ;
l'acquisition d'au moins un dispositif cache et d'informations sur une deuxième zone respective qui peut être desservie par chacun des au moins un dispositif cache ;
la détermination d'un dispositif cache pour l'UE en fonction des informations de position et des informations sur la deuxième zone, le dispositif cache déterminé appartenant à un réseau mobile auquel l'UE accède, et les informations sur la deuxième zone qui peut être desservie par le dispositif cache déterminé comprenant les informations de position d'accès de l'UE ; et
l'envoi d'un identifiant correspondant au dispositif cache déterminé à l'appareil de distribution de contenu, de sorte que l'appareil de distribution de contenu envoie un message de redirection à l'UE, et l'UE redirige au dispositif cache correspondant à l'identifiant pour acquérir le contenu demandé.

5. Procédé de distribution de contenu selon la revendication 4, avant la réception d'une demande de recherche d'un dispositif cache envoyé par un dispositif de distribution de contenu, comprenant en outre :
l'envoi d'informations d'enregistrement au dispositif de distribution de contenu, les informations d'enregistrement comprenant des informations d'identification d'un appareil de commande de contenu et des informations sur une première zone qui peut être desservie par l'appareil de commande de contenu, afin que le dispositif de distribution de contenu détermine, en fonction des informations de position d'accès de l'équipement d'utilisateur UE et des informations sur la première zone, un appareil de commande de contenu pour desservir l'UE ; ou
l'envoi d'informations d'enregistrement à un serveur de nom de domaine, serveur DNS ou un serveur d'optimisation de trafic de couche d'application, serveur ALTO, les informations d'enregistrement comprenant des informations d'identification de l'appareil de commande de contenu et des informations sur une première zone qui peut être desservie par l'appareil de commande de contenu, afin que le serveur DNS ou le serveur ALTO détermine, en fonction des informations de position d'accès de l'équipement d'utilisateur UE et des informations sur la première zone, un appareil de commande de contenu pour desservir l'UE.

6. Procédé de distribution de contenu selon la revendication 4, la demande de recherche d'un dispositif cache comprenant un identifiant du contenu demandé par l'UE ; et
la détermination d'un dispositif cache pour l'UE en fonction des informations de position et des informations sur la deuxième zone comprenant :
la sélection, en fonction des informations de position et des informations sur la deuxième zone qui peut être desservie par l'au moins un dispositif cache, d'un dispositif cache parmi l'au moins un dispositif cache comme dispositif cache qui fournit le contenu demandé par l'UE ;
si au moins deux dispositifs caches sont sélectionnés, la demande si le contenu correspondant à l'identifiant du contenu demandé par l'UE est déjà mis en cache dans les dispositifs caches sélectionnés ; et
la sélection d'un dispositif cache qui met en cache le contenu demandé par l'UE en tant que dispositif cache qui fournit le contenu demandé par l'UE.

7. Procédé de distribution de contenu selon l'une quelconque des revendications 4 à 6, la détermination d'un dispositif cache pour l'UE comprenant en outre :
la fourniture d'informations d'instruction au dispositif cache déterminé, les informations d'instruction portant l'identifiant du contenu demandé par l'UE, et les informations d'instruction étant utilisées pour ordonner au dispositif cache de stocker le contenu demandé ou de soumettre le contenu demandé à l'UE quand une demande de contenu correspondant à l'identifiant est reçue.

8. Appareil de distribution de contenu d'un fournisseur de réseau de distribution de contenu, CDN, l'appareil de distribution de contenu comprenant :
un module de réception de demande de contenu (41), configuré pour recevoir une demande de contenu d'un équipement d'utilisateur, UE ;
un premier module d'acquisition d'informations de position (42), configuré pour :
lorsque la demande de contenu de l'équipement d'utilisateur UE est reçue, acquérir les informations de position d'accès de l'UE ; les informations de position d'accès de l'UE comprenant une zone d'acheminement, une zone de localisation, une zone de suivi ou une cellule ;
un module d'acquisition d'appareil de commande de contenu (43), configuré pour acquérir au moins un appareil de commande de contenu et des informations sur une première zone respective qui peut être desservie par chacun des au moins un appareil de commande de contenu ; chacun des au moins un appareil de commande de contenu étant une passerelle dans un réseau mobile ;
un appareil de commande de contenu déterminant un module (44), configuré pour déterminer, en fonction des informations de position et des informations sur la première zone, un appareil de commande de contenu, les informations sur la première zone qui peut être desservie par l'appareil de commande de contenu déterminé comprenant les informations de position d'accès de l'UE ;
un module d'envoi de demande de recherche (45), configuré pour envoyer une demande de recherche d'un dispositif cache à l'appareil de commande de contenu déterminé, la demande portant les informations de position d'accès de l'UE, et le dispositif cache étant un dispositif cache d'un réseau d'accès d'un réseau mobile ;
un module de réception d'identifiant (46), configuré pour recevoir, en réponse à la demande, un identifiant d'un dispositif cache renvoyé par l'appareil de commande de contenu, le dispositif cache appartenant à un réseau mobile auquel l'UE accède ; et
un module d'envoi de message (47), configuré pour envoyer un message de redirection à l'UE, de sorte que l'UE redirige la demande de contenu au dispositif cache correspondant à l'identifiant pour acquérir le contenu demandé, le message de redirection comprenant l'identifiant.

9. Appareil de distribution de contenu selon la revendication 8, le module d'acquisition d'appareil de commande de contenu comprenant :
une première unité d'interrogation (431), configurée pour interroger des informations d'enregistrement stockées de l'au moins un appareil de commande de contenu en fonction des informations de position, les informations d'enregistrement comprenant des informations d'identification de l'appareil de commande de contenu et des informations sur la première zone qui peut être desservie par l'appareil de commande de contenu ; et
le module de détermination de l'appareil de commande de contenu comprenant :
une première unité de détermination (441), configurée pour sélectionner un appareil de commande de contenu parmi l'au moins un appareil de commande de contenu en fonction des informations de position et des informations sur la première zone, et déterminer l'appareil de commande de contenu comme appareil de commande de contenu pour desservir l'UE.

10. Appareil de distribution de contenu selon l'une quelconque des revendications 8 à 9, le module d'acquisition de l'appareil de commande de contenu comprenant :
une deuxième unité d'interrogation (432), configurée pour envoyer une demande d'interrogation d'un appareil de commande de contenu à un serveur de noms de domaine, serveur DNS, ou un serveur d'optimisation de trafic de couche d'application, serveur ALTO, la demande d'interrogation portant les informations de position d'accès de l'UE, de sorte que le serveur DNS ou le serveur ALTO interroge les informations d'enregistrement stockées de l'au moins un appareil de commande de contenu en fonction des informations de position, et les informations d'enregistrement comprenant les informations d'identification de l'appareil de commande de contenu et les informations sur la première zone qui peut être desservie par l'appareil de commande de contenu ; et
le module de détermination de l'appareil de commande de contenu comprenant :
une deuxième unité de détermination (442), configurée pour : recevoir les informations d'enregistrement de l'au moins un appareil de commande de contenu renvoyé par le serveur DNS ou le serveur ALTO, sélectionner un appareil de commande de contenu parmi l'au moins un appareil de commande de contenu en fonction des informations de position et des informations sur la première zone, et déterminer l'appareil de commande de contenu comme appareil de commande de contenu pour desservir l'UE.

11. Appareil de commande de contenu étant une passerelle dans un réseau mobile, l'appareil de commande de contenu comprenant :
un module de réception de demande de recherche (52), configuré pour recevoir une demande de recherche d'un dispositif cache envoyé par un appareil de distribution de contenu d'un fournisseur de réseau de distribution de contenu, CDN, la demande portant les informations de position d'accès d'un équipement d'utilisateur, UE, et le dispositif cache étant un dispositif cache d'un réseau d'accès d'un réseau mobile ;
un deuxième module d'acquisition d'informations de position (53), configuré pour acquérir les informations de position d'accès de l'UE en analysant la requête ; les informations de position d'accès de l'UE comprenant une zone d'acheminement, une zone de localisation, une zone de suivi ou une cellule ;
un module d'acquisition de dispositif cache (54), configuré pour acquérir au moins un dispositif cache et des informations sur une deuxième zone respective qui peut être desservie par chacun des au moins un dispositif cache ;
un module de détermination de dispositif cache (55), configuré pour déterminer un dispositif cache pour l'UE en fonction des informations de position et des informations sur la deuxième zone, le dispositif cache déterminé appartenant à un réseau mobile auquel l'UE accède, et les informations sur la deuxième zone qui peut être desservie par le dispositif cache déterminé comprenant les informations de position de l'UE ; et
un module d'envoi d'identifiant de dispositif cache (56), configuré pour envoyer un identifiant correspondant au dispositif cache déterminé à l'appareil de distribution de contenu, de sorte que l'appareil de distribution de contenu envoie un message de redirection à l'UE, et l'UE redirige au dispositif cache correspondant à l'identifiant pour acquérir le contenu demandé.

12. Appareil de commande de contenu selon la revendication 11, comprenant en outre :
un premier module d'envoi d'informations d'enregistrement (511), configuré pour envoyer des informations d'enregistrement à l'appareil de distribution de contenu, les informations d'enregistrement comprenant des informations d'identification de l'appareil de commande de contenu et des informations sur une première zone qui peut être desservie par l'appareil de commande de contenu, afin que l'appareil de distribution de contenu détermine, en fonction des informations de position d'accès de l'équipement d'utilisateur UE et des informations sur la première zone, un appareil de commande de contenu pour desservir l'UE ; ou
un deuxième module d'envoi d'informations d'enregistrement (512), configuré pour envoyer des informations d'enregistrement à un serveur de nom de domaine, serveur DNS, ou un serveur d'optimisation de trafic de couche d'application, serveur ALTO, les informations d'enregistrement comprenant des informations d'identification de l'appareil de commande de contenu et des informations sur une première zone qui peut être desservie par l'appareil de commande de contenu, afin que le serveur DNS ou le serveur ALTO détermine, en fonction des informations de position d'accès de l'équipement d'utilisateur UE et des informations sur la première zone, un appareil de commande de contenu pour desservir l'UE.

13. Appareil de commande de contenu selon la revendication 11, la demande de recherche d'un dispositif cache comprenant un identifiant du contenu demandé par l'UE ; et
le module de détermination de dispositif cache comprenant :
une unité de sélection de dispositif cache (551), configurée pour sélectionner, en fonction des informations de position et des informations sur la deuxième zone qui peut être desservie par l'au moins un dispositif cache, un dispositif cache parmi l'au moins un dispositif cache comme le dispositif cache qui fournit le contenu demandé par l'UE ;
une unité d'interrogation de cache (552), configurée pour : lorsqu'au moins deux dispositifs caches sont sélectionnés, demander si le contenu correspondant à l'identifiant du contenu demandé par l'UE est déjà mis en cache dans les dispositifs caches sélectionnés ; et
une unité de détermination de dispositif cache (553), configurée pour sélectionner un dispositif cache qui met en cache le contenu demandé par l'UE comme dispositif cache qui fournit le contenu demandé par l'UE.

14. Appareil de commande de contenu selon l'une quelconque des revendications 11 à 13, le module de détermination de dispositif cache comprenant en outre :
une unité d'envoi d'informations d'instruction (554), configurée pour fournir des informations d'instruction au dispositif cache déterminé, les informations d'instruction portant l'identifiant du contenu demandé par l'UE, et les informations d'instruction étant utilisées pour ordonner au dispositif cache de stocker le contenu demandé ou de soumettre le contenu demandé à l'UE lorsqu'une demande de contenu correspondant à l'identifiant est reçue.

15. Système de distribution de contenu, comprenant l'appareil de distribution de contenu selon l'une quelconque des revendications 8 à 10 et l'appareil de commande de contenu selon l'une quelconque des revendications 11 à 14.
